(19)

Europäisches
Patentamt
European
Patent Office
Office européen
des brevets

(11) **EP 4 383 841 A1**

(12) **EUROPEAN PATENT APPLICATION**
published in accordance with Art. 153(4) EPC

(43) Date of publication:
**12.06.2024 Bulletin 2024/24**

(21) Application number: **22853498.8**

(22) Date of filing: **04.08.2022**

(51) International Patent Classification (IPC):
**H04W 52/14** (2009.01)    **H04W 52/38** (2009.01)
**H04W 84/04** (2009.01)    **H04W 92/20** (2009.01)

(52) Cooperative Patent Classification (CPC):
**H04W 52/14; H04W 52/38; H04W 84/04;
H04W 92/20**

(86) International application number:
**PCT/KR2022/011582**

(87) International publication number:
**WO 2023/014123 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021   KR 20210104128
08.10.2021   KR 20210134354
05.11.2021   KR 20210151524**

(71) Applicant: **LG Electronics Inc.
Yeongdeungpo-gu
Seoul 07336 (KR)**

(72) Inventors:
• **SHIM, Jaenam
Seoul 06772 (KR)**
• **KO, Hyunsoo
Seoul 06772 (KR)**
• **YOU, Hyangsun
Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **METHOD AND DEVICE FOR ADJUSTING DOWNLINK POWER IN WIRELESS COMMUNICATION SYSTEM**

(57)    A method and a device for adjusting downlink power in a wireless communication system are disclosed. A method for receiving control information according to an embodiment of the present disclosure may comprise the steps of: receiving, from a base station, first configuration information related to a serving cell and second configuration information related to a CSI-RS resource, the first configuration information including information on energy per resource element (EPRE) of a secondary synchronization signal (SSS), the second configuration information including information on a first power offset of EPRE of the CSI-RS resource against the EPRE of the SSS; and receiving control information for adjustment of downlink transmission power from the base station. The control information may include an index of a CSI-RS resource related to the adjustment of the downlink transmission power.

FIG.14

Receive first configuration information related
to a serving cell and second configuration
information related to CSI-RS resource — S1401

↓

Receive control information for power
adjustment of downlink transmission — S1402

EP 4 383 841 A1

## Description

[Technical Field]

The present disclosure relates to a wireless communication system, and in more detail, relates to a method and an apparatus for adjusting the power of downlink transmission in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for adjusting (updating) the power of downlink transmission.

In addition, an additional technical object of the present disclosure is to provide a method and an apparatus for dynamically adjusting (updating) the power of downlink transmission in a wireless communication system supporting integrated access and backhaul (IAB).

The technical objects to be achieved by the present disclosure are not limited to the above-described technical objects, and other technical objects which are not described herein will be clearly understood by those skilled in the pertinent art from the following description.

[Technical Solution]

A method of receiving control information in a wireless communication system according to an aspect of the present disclosure may include: receiving, from a base station, first configuration information related to a serving cell and second configuration information related to a CSI-RS resource, wherein the first configuration information includes information on energy per resource element (EPRE) of a secondary synchronization signal (SSS) and the second configuration information includes information on a first power offset of EPRE of the CSI-RS resource relative to the EPRE for the SSS; and receiving, from the base station, control information for power adjustment of downlink transmission. The control information may include an index of a CSI-RS resource related to power adjustment of the downlink transmission.

A method of transmitting control information in a wireless communication system according to an additional aspect of the present disclosure may include: transmitting, to a user equipment (UE), first configuration information related to a serving cell and second configuration information related to a CSI-RS resource, wherein the first configuration information includes information on energy per resource element (EPRE) of a secondary synchronization signal (SSS) and the second configuration information includes information on a first power offset of EPRE of the CSI-RS resource relative to the EPRE for the SSS; and transmitting, to the UE, control information for power adjustment of downlink transmission. The control information may include an index of a CSI-RS resource related to power adjustment of the downlink transmission.

[Technical Effects]

According to an embodiment of the present disclosure, the power of downlink transmission can be dynamically adjusted/updated.

In addition, according to an embodiment of the present disclosure, in a wireless communication system supporting IAB, performance of a backhaul link can be improved by dynamically adjusting/updating the power of downlink transmission.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a network with an integrated access and backhaul link in a wireless communication system to which the present disclosure can be applied.
FIG. 8 illustrates a network with an integrated access and backhaul link in a wireless communication system to which the present disclosure can be applied.
FIG. 9 illustrates an SA mode using NGC and an NSA mode using EPC in a wireless communication system to which the present disclosure can be applied.
FIG. 10 is a diagram illustrating an integrated access and backhaul link in a wireless communication system to which the present disclosure can be applied.
FIG. 11 illustrates multiple MT-CCs and multiple DU-cells in a wireless communication system to which the present disclosure can be applied.
FIG. 12 illustrates a case where an IAB node is connected to parent node 1 and parent node 2 in a wireless communication system to which the present disclosure can be applied.
FIG. 13 is a diagram illustrating a signaling procedure between a base station and a UE for a downlink power adjustment method according to an embodiment of the present disclosure.
FIG. 14 is a diagram illustrating an operation of a UE for the downlink power adjustment method according to an embodiment of the present disclosure.
FIG. 15 is a diagram illustrating an operation of a base station for a downlink power adjustment method according to an embodiment of the present disclosure.
FIG. 16 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator

- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

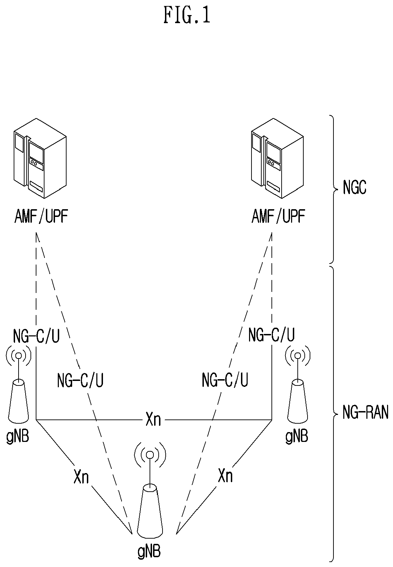

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

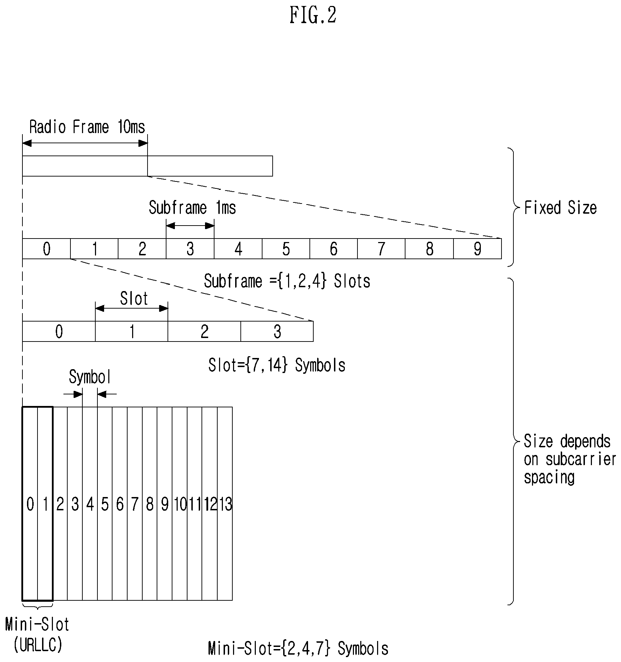

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f / 100) \cdot T_c = 10$ms. Here, a radio frame is configured with 10 subframes having a duration of $T_{sf} = (\Delta f_{max} N_f / 1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu} - 1\}$ in a subframe and are numbered in an increasing order of $n_{s,f}^{\mu} \in \{0,..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |

(continued)

| $\mu$ | $N_{symb}^{slot}$ | $N_{slot}^{frame,\mu}$ | $N_{slot}^{subframe,\mu}$ |
|---|---|---|---|
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

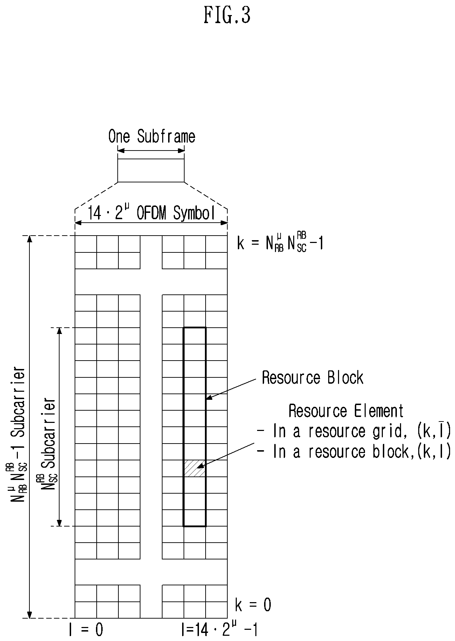

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14\cdot2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu}\leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

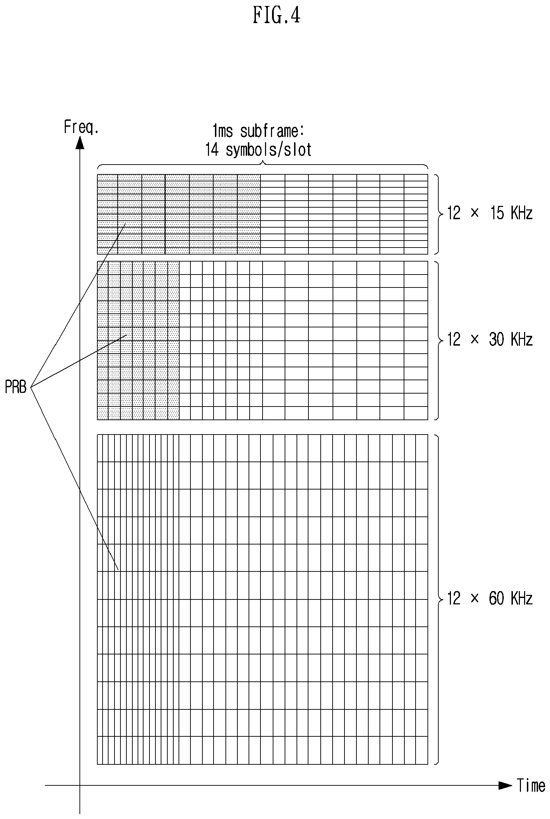

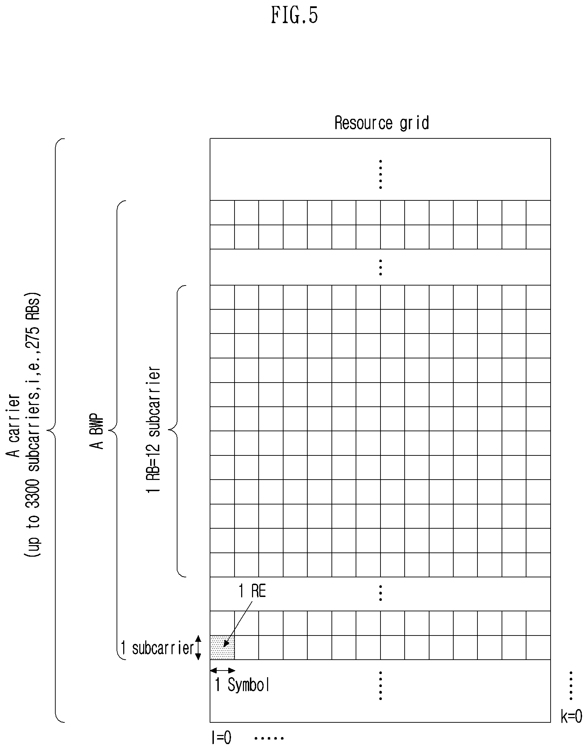

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

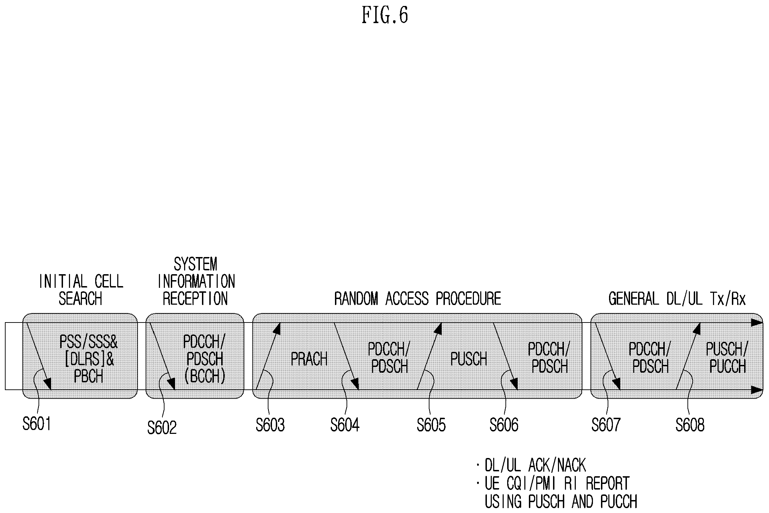

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Integrated Access and Backhaul (IAB)

Definitions and abbreviations of terms that can be used in this disclosure are defined as follows.

- IAB-node: A RAN node that supports wireless access for UE and backhauls access traffic wirelessly
  IAB-donor: A RAN node that provides a UE's interface to a core network and wireless backhaul functionality to an IAB-node
- IAB: Integrated Access and Backhaul
- DgNB: Donor gNB
- AC: Access
- BH: Backhaul
- DU: Distributed Unit
- MT: Mobile terminal
- CU: Centralized Unit
- IAB-MT: IAB mobile terminal
- NGC: Next-Generation Core network
- SA: Stand-alone
- NSA: non-stand-alone
- EPC: Evolved Packet Core

1) IAB Overview

One of potential technologies enabling future cellular network deployment scenarios and applications is support for wireless backhaul and relay links, and acordingly, NR cells can be deployed flexibly and very densely without the need to densify a transmission network.

Due to a greater bandwidth available for NR compared to LTE (e.g., mmWave spectrum) along with a native deployment of massive MIMO or multi-beam systems in NR, dvelop and deploy integrated access and backhaul (IAB) links. By building on many control and data channels/procedures defined to provide access to UEs, it makes it easier to deploy dense networks of self-backhauled NR cells in a more integrated manner.

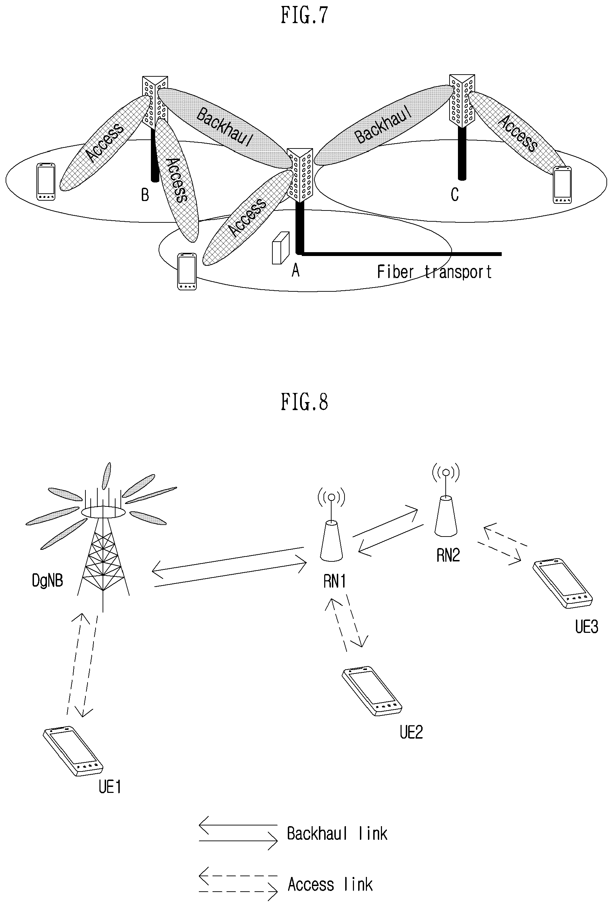

FIG. 7 illustrates a network with an integrated access and backhaul link in a wireless communication system to which the present disclosure can be applied.

Here, a relay node (rTRP) may multiplex access and backhaul links in time, frequency, or space (e.g., beam-based operation).

An operation of different links may be performed at the same or different frequencies (also referred to as 'in-band' and 'out-band' relays).

Additionally, because operating NR systems in mmWave spectrum requires a larger time-scale for procedure completion compared to short-term blocking, it presents several unique challenges, including experiencing severe short-term blocking that cannot be easily mitigated with current RRC-based handover mechanisms. To overcome short-term blocking in mmWave systems, a fast RAN-based mechanism for switching between rTRPs may be needed, and this does not necessarily require intervention from a core network. The need to mitigate short-term blocking for NR operation in the mmWave spectrum, along with easier deployment of self-backhauled NR cells described above, requires the development of an integrated framework that allows fast switching of access and backhaul links. Over-the-air (OTA) coordination between rTRPs may also be considered to mitigate interference and support end-to-end route selection and optimization.

FIG. 8 illustrates a network with an integrated access and backhaul link in a wireless communication system to which the present disclosure can be applied.

IAB node can operate in a stand-alone (SA) or non-stand-alone (NSA) mode. When operating in NSA, an IAB node only use an NR link for backhauling. A UE connecting to an IAB node can select an operation mode different from that of the IAB node. A UE can additionally connect to a different type of core network than the connected IAB node. In this case, an (enhanced) dedicated core network ((e)Decor) or slicing may be used for core network (CN) selection. An IAB node operating in NSA mode can be connected to the same or different eNB. A UE operating on an NSA node can connect to the same or different eNB as the connected IAB node.

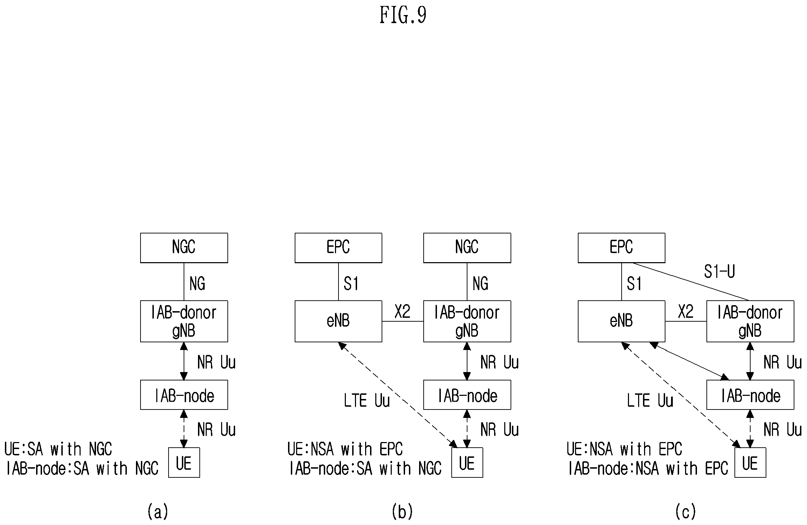

FIG. 9 illustrates an SA mode using NGC and an NSA mode using EPC in a wireless communication system to which the present disclosure can be applied.

Referring to FIG. 9(a), a UE and an IAB node can operate in stand-alone (SA: strand-alone) mode with NGC. Referring to FIG. 9(b), a UE operates in non-stand-alone (NSA) mode with EPC, while an IAB node may operate in SA mode with NGC. Referring to Figure 9(c), a UE and an IAB node can operate in NSA with EPC.

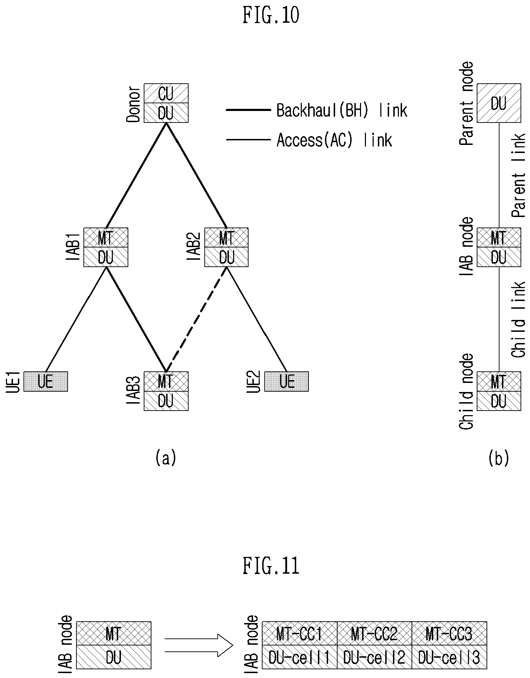

FIG. 10 is a diagram illustrating an integrated access and backhaul link in a wireless communication system to which the present disclosure can be applied.

Referring to FIG. 10(a), a link between a donor node and an IAB node or a link between IAB nodes is referred to as a backhaul link. On the other hand, a link between a donor node and a UE or a link between an IAB node and a UE is referred to as an access link. That is, a link between an MT and a parent DU or a link between a DU and a child MT is referred to as a backhaul link, and a link between a DU and a UE is referred to as an access link.

Referring to Figure 10(b), a link between an IAB node and a parent node is referred to as a parent link, and a link between an IAB node and a child node/UE is referred to as a child link. That is, a link between a MT and a parent DU is referred to as a parent link, and a link between a DU and a child MT/UE is referred to as a child link.

However, depending on interpretation or perspective, a link between an IAB node and a parent node may be referred to as a backhaul link, and a link between an IAB node and a child node/UE may be referred to as an access link.

2) IAB node initial access

An IAB-node may initially follow the same initial access procedure as a UE, including cell search, system information (SI) acquisition, and random access to establish a connection to a parent IAB-node or an IAB-donor. SSB/CSI-RS-based radio resource management (RRM) measurement defined in Rel-15 NR is a starting point for IAB-node discovery and measurement.

A discovery procedure between IAB-nodes where a half-duplex constraint and multi-hop topology, including how to avoid conflicting SSB configurations between IAB-nodes and feasibility of CSI-RS-based IAB-node discovery, are applied must be considered. When considering a cell ID (identity) used by a given IAB-node, two cases can be additionally considered:

- Case 1: IAB-donor and IAB-node share the same cell ID
- Case 2: IAB-donor and IAB-node maintain separate cell IDs

Additionally, a mechanism for multiplexing random access channel (RACH) transmission from a UE and RACH transmission from an IAB-node should be additionally considered.

For SA deployment, to establish a connection to an initial parent IAB-node or an IAB-donor, initial IAB-node discovery by MT (step 1) follows the same Rel-15 initial access procedure (including cell search, SI acquisition and random access based on the same SSBs available to an access UE) as a UE.

In the case of NSA deployment (from an access UE perspective), when an IAB-node MT performs initial access to an NR carrier, it follows the same stage 1 initial access as in SA deployment (from an access UE perspective). SSB/RMSI (remaining material system information) periodicity assumed by a MT for initial access may be longer than 20 ms assumed by the Rel-15 UE, and a single value can be selected from candidate values of 20ms, 40ms, 80ms, and 160ms.

3) Backhaul link measurement

Measurements on multiple backhaul links should be considered for link management and path selection. To support a half-duplex constraint from a perspective of a given IAB-node, IAB supports discovery and measurement of a candidate backhaul link (after initial access) utilizing a resource temporally orthogonal to a resource used by an access UE for cell discovery and measurement. In this regard, the following may be additionally considered.

TDM in an SSB (e.g., based on hop order, cell ID, etc.)

- An SSB muting in an IAB-node
- Multiplexing of SSBs for an access UE and IAB within or across half-frames

- An additional IAB-node discovery signal (e.g. CSI-RS) that is TDMed with Rel-15 SSB transmission
- Use of an off-raster SSB
- A different transmission cycle for backhaul link detection and measurement compared to a cycle used by an access UE

A coordination mechanism for various solutions should be additionally considered, including a mechanism for transmitting a reference signal (RS) to the IAB-node and coordinating measurement occasions.

For backhaul link reference signal received power (RSRP)/reference signal received quality (RSRQ) RRM measurement, IAB supports both an SSB-based solution and a CSI-RS-based solution.

After an IAB-node DU is activated (step 2), for an inter-IAB-node and donor detection, a discovery procedure between IAB-nodes must consider a half-duplex constraint in an IAB-node and multi-hop topology. The following solutions are supported.

- SSB-based solution: Use of an SSB that is orthogonal (TDM and/or FDM) to an SSB used in an access UE

4) Backhaul link management

IAB-node supports a mechanism for detecting/recovering backhaul link failure based on the Rel-15 mechanism. Improvements to beam failure recovery (BFR) and radio link failure (RLF) procedures should be supported in an NR IAB, including:

- Enhancements to support interaction between Beam Failure Recovery success indication and RLF;
- Improvements to the existing beam management procedure for faster beam switching/coordination/recovery to avoid a backhaul link outage should be considered for an IAB-node.

Additionally, a solution to prevent RLF in a child IAB-node due to parent backhaul link failure must be supported.

5) Mechanism for transmission/reception or path switching on multiple backhaul links

Mechanisms for efficient path switching or transmit/receive simultaneously on multiple backhaul links (e.g., multi-TRP operation and in-frequency dual connectivity) should be considered.

6) Scheduling of backhaul and access link

DL IAB node transmissions (i.e., transmission, served by an IAB-node, over a backhaul link from the IAB-node to a child IAB-node and transmission, served by an IAB node, over an access link from the IAB-node to a UE) must be scheduled by an IAB-node itself. UL IAB transmission (backhaul link transmission from an IAB-node to a parent IAB-node or an IAB-donor) must be scheduled by a parent IAB-node or an IAB-donor.

7) Multiplexing of backhaul and access links

IAB supports time division multiplexing (TDM), frequency division multiplexing (FDM), and spatial division multiplexing (SDM) between a parent link and a child link in an IAB-node according to a half-duplex constraint. Considering an IAB-node half-duplex constraint, an efficient TDM/FDM/SDM multiplexing mechanism of parent and child link traffic across multi-hops should be considered. the following solutions for various multiplexing options can be further considered.

- Mechanism for orthogonal division of a time slot or a frequency resource between an access link and a backhaul link across one or multiple hops

Utilizing various DL/UL slot configurations for an access link and a backhaul link

DL and UL power control enhancements and timing requirements to allow intra-panel FDM and SDM of parent and child links

- Interference management, including cross-link interference

8) IAB-node synchronization and timing alignment

A feasibility of OTA synchronization and an impact of timing misalignment on IAB performance (e.g., number of supportable hops) were studied. Assuming <=3us timing requirements across IAB-nodes within overlapping coverage, timing advance (TA)-based OTA synchronization can support multi-hop IAB networks (up to 5 hops) for FR2.

IAB supports TA-based synchronization between IAB-nodes, including multiple backhaul hops.

- Case A: DL transmission timing alignment across an IAB-node and an IAB-donor: If DL TX (transmission) and UL RX (reception) are not well aligned in a parent node, a child node performs OTA-based timing and synchronization. To properly configure a DL TX timing for alignment, additional information is needed.

Case A is supported for both access and backhaul link transmission timing alignment.

- Case B (Case A DL transmission timing + UL transmission timing (DL and UL transmission timing are aligned within an IAB-node)): DL transmission timing for every IAB-node is aligned with parent IAB-node or donor DL timing. UL transmission timing of an IAB-node can be aligned with DL transmission timing of an IAB-node.

Utilization of Case B above, if supported by an IAB-node, must be under the control of a parent or network.

The following solutions may be supported to enable DL transmission alignment between IAB-nodes.

- Alt 1: An IAB-node may need to perform parallel (always time multiplexed) Case A and Case B UL transmission.
- Alt 2: To correct potential misalignment of DL Tx timing in a child node, signaling between a parent node and an IAB-node for a time difference between DL Tx and UL Rx timing in a parent node: a child IAB-node compares a corresponding difference between its own DL Tx timing and BH (backhaul) Rx timing. If a signaled difference of a parent node is larger than that measured in a child node, a child node advances TX timing, and if it is small, TX timing is delayed.

Case C (Case A + UL reception timing (DL and UL reception timing are aligned within an IAB-node)): DL transmission timing for every IAB-node is aligned with parent IAB-node or donor DL timing. UL reception timing of an IAB-node can be aligned with DL reception timing of an IAB-node. If DL TX and UL RX are not well aligned in a parent node, a child node needs additional information about alignment to properly configure DL TX timing for OTA-based timing and synchronization.

In Case C, by introducing TDM between a child IAB-node/Rel-16 UE supporting i) "effective" negative TA and ii) a new TA value and a child IAB-node/UE not supporting a new TA, it is compatible with a Rel-15 UE. The following solutions can be supported to enable alignment between DL and UL reception within an IAB-node.

- Alt 1: The introduction of negative initial TA (time alignment) for an IAB-node is applied to a child node of an IAB-node applying Case C timing.
- Alt 2: A positive TA that enables symbol alignment rather than slot alignment is applied between DL reception and UL reception in an IAB-node.
- Alt 3: To achieve effective negative TA, signaling of a relative offset to the most recent TA value is applied to a child node of an IAB-node applying Case C.

In addition to OTA synchronization, synchronization between IAB-nodes can be achieved using other technologies, such as Global Navigation Satellite System (GNSS) and Precision Time Protocol (PTP).

9) Resource allocation for IAB

From an IAB-node MT perspective, the following time domain resource may be indicated for a parent link:

- DL time resource;
- UL time resource;
- Flexible time resource.

From an IAB-node DU perspective, the following time resource may be indicated to a child link:

- DL time resource;
- UL time resource;
- Flexible time resource.

Each of DL, UL, and flexible time resource types of a DU child link may belong to one of the following three categories:

- Hard: A time resource for a DU child link is always available.
- Soft: The availability of a corresponding time resource for a DU child link is explicitly and/or implicitly controlled by a parent node.
- Not available: A resource not used for communication of a DU child link.

In order to support a resource allocation mechanism for an IAB-node, semi-static configuration is supported for configuration of an IAB-node DU resource. Additionally, a dynamic indication (L1 signaling) of the availability of a soft resource for an IAB-node DU to an IAB-node is supported. Using the existing Rel-15 L1 signaling method as a baseline, potential improvements (e.g. new slot format), rules for DU/MT behavior in case of collisions across multi hops, and processing time constraints at an IAB-node must be considered.

10) IAB operation

Table 6 shows an example of DCI formats in the NR system.

[Table 61

| DCI format | Use |
| --- | --- |
| 0_0 | Scheduling of a PUSCH in one cell |
| 0_1 | Scheduling of a PUSCH in one cell |
| 1_0 | Scheduling of a PDSCH in one cell |
| 1_1 | Scheduling of a PUSCH in one cell |
| 2_0 | Notification of slot format to UE group |
| 2_1 | Notification of PRB(s) and OFDM(s) to UE group, UE may assume no transmission is intended for that UE |
| 2_2 | Transmission of TPC (transmit power control) command for PUCCH and PUSCH |
| 2_3 | Transmission of a group of TPC commands for SRS transmission by one or more UEs |
| 2_5 | Notification of availability of soft resource |

DCI format 2_5 is used to notify the availability of a soft resource.
The following information may be transmitted via DCI format 2_5 with CRC scrambled by an availability indicator-RNTI (AI-RNTI):

- Availability indicator 1, availability indicator 2, ..., availability indicator N.

A size of DCI format 2_5 with CRC scrambled by an AI-RNTI can be configured by higher layer up to 128 bits.
Unless otherwise described in the present disclosure, the term "UE" can be applied equally to an IAB-node MT of an IAB-node. That is, unless otherwise discribed, the UE's operations described in the present disclosure can also be performed by an IAB-node MT.
The procedures for an IAB-node MT to perform cell discovery, system information acquisition, or random access procedures is the same as the procedures for a UE except for the following.
For initial cell selection, an IAB-node MT can assume that a half frame with an SS/PBCH block has a period of 16 frames.
For PRACH (physical random access channel) transmission, an IAB-node MT determines a frame and subframe within the frame including a PRACH occasion.
An IAB-node MT determines an association period for mapping an SS/PBCH block to a PRACH occasion based on a PRACH configuration period according to Table 7. An association pattern period includes one or more association periods, and is determined so that a pattern between a PRACH occasion and an SS/PBCH block repeats at a maximum of every 640 msec. A PRACH occasion within a PRACH slot is valid depending on the conditions.
Table 7 illustrates the mapping between a PRACH configuration period for an IAB-node MT and an association period to a PRACH occasion of an SS/PBCH block.

[Table 7]

| PRACH configuration cycle (msec) | association period (number of PRACH configuration periods) |
|---|---|
| 10 | {1, 2, 4, 8, 16, 32, 64} |
| 20 | {1, 2, 4, 8, 16, 32} |
| 40 | {1, 2, 4, 8, 16} |
| 80 | {1, 2, 4, 8} |
| 160 | {1, 2, 4} |
| 320 | {1, 2} |
| 640 | {1} |

If an IAB-node receives the $T_{delta}$ value from a serving cell, when $(N_{TA}+N_{TA,offset})·T_C/2+ T_{delta}>0$, an IAB-node can assume that $(N_{TA}+N_{TA,offset})·T_C/2+ T_{delta}$ is a time difference between DU transmission of a signal to a serving cell and reception of the signal by an IAB-node MT. Here, $N_{TA}$ and $N_{TA,offse}$ can be obtained according to TS 38.213 Section 4.2. An IAB-node can use the time difference to determine a DU transmission time.

A slot format for an IAB-node DU or an IAB-node MT includes DL symbols, UL symbols, and flexible symbols.

For each serving cell of an IAB-node DU, an IAB-node DU may be provided with an indication for slot formats for multiple slots by IAB-DU-Resource-Configuration. For each serving cell, an IAB-node MT may be provided with an indication for slot formats for multiple slots by tdd-UL-DL-ConfigDedicated-IAB-MT. When an IAB-node MT is provided with tdd-UL-DL-ConfigDedicated-IAB-MT, the parameter tdd-UL-DL-ConfigDedicated-IAB-MT overrides only flexible symbols in slot formats for multiple slots provided by TDD-UL-DL-ConfigurationCommon.

tdd-UL-DL-ConfigDedicated-IAB-MT provides a set of slot configurations by slotSpecificConfigurationsToAddModList-IAB-MT. And, from a set of slot configurations, a slot index is provided by 'slotindex' for each slot configuration, and a set of symbols for a slot is provided by 'symbols'.

Here, if 'symbols'='all Downlink, all symbols in a slot are DL. If 'symbols'='all Uplink, all symbols in a slot are UL.

Additionally, if 'symbols'='explicit', nrofDownlinkSymbols provides the number of first DL symbols in a slot and nrofUplinkSymbols provides the number of last UL symbols in the slot. If nrofDownlinkSymbols is not provided, there is no first DL symbol in a slot, and if nrofUplinkSymbols is not provided, there is no last UL symbol in a slot. The remaining symbols in a slot are flexible.

Additionally, if 'symbols'='explicit-IAB-MT', nrofUplinkSymbols provides the number of first UL symbols in a slot and nrofDownlinkSymbols provides the number of last DL symbols in a slot. If nrofUplinkSymbols is not provided, there is no first UL symbol in a slot, and if nrofDownlinkSymbols is not provided, there is no last DL symbol in a slot. The remaining symbols in a slot are flexible.

IAB-MT applies a format provided by the corresponding symbols to each slot with a corresponding index provided by 'slotIndex'.

An IAB node MT may be provided with a list of slot format combinations applicable to one serving cell by SlotFormatCombinationsPerCell-IAB-MT, and may be provided with configuration for monitoring DCI format 2_0, which indicates a slot format combination, from a list of slot format combinations across multiple slots by SlotFormatIndicator-IAB-MT. In addition to the slot formats defined in TS 38.213 Section 11.1, an SFI (slot format indicator) field for an IAB-node MT in DCI format 2_0 can indicate a slot format to an IAB-node MT from the slot formats in Table 8.

Table 8 illustrates slot formats for a normal cyclic prefix.

[Table 8]

| Slot format | Symbol number in slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 56 | U | U | U | U | U | U | U | U | U | U | U | U | U | F |
| 57 | U | U | U | U | U | U | U | U | U | U | U | U | F | F |
| 58 | U | U | U | U | U | U | U | U | U | U | U | F | F | F |
| 59 | U | U | U | U | U | U | U | U | U | F | F | F | F | F |
| 60 | U | U | U | U | U | U | U | U | U | F | F | F | F | F |
| 61 | U | U | U | U | U | U | U | U | F | F | F | F | F | F |

(continued)

| Slot format | Symbol number in slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 62 | U | U | U | U | U | U | U | F | F | F | F | F | F | F |
| 63 | U | U | U | U | U | U | F | F | F | F | F | F | F | F |
| 64 | U | U | U | U | U | F | F | F | F | F | F | F | F | F |
| 65 | U | U | U | U | F | F | F | F | F | F | F | F | F | F |
| 66 | U | U | U | F | F | F | F | F | F | F | F | F | F | F |
| 67 | U | U | F | F | F | F | F | F | F | F | F | F | F | F |
| 68 | U | F | F | F | F | F | F | F | F | F | F | F | F | F |
| 69 | U | F | F | F | F | F | F | F | F | F | F | F | F | D |
| 70 | U | U | F | F | F | F | F | F | F | F | F | F | F | D |
| 71 | U | U | U | F | F | F | F | F | F | F | F | F | F | D |
| 72 | U | F | F | F | F | F | F | F | F | F | F | F | D | D |
| 73 | U | U | F | F | F | F | F | F | F | F | F | D | D | D |
| 74 | U | U | U | F | F | F | F | F | F | F | F | D | D | D |
| 75 | U | F | F | F | F | F | F | F | F | F | D | D | D | D |
| 76 | U | U | F | F | F | F | F | F | F | F | D | D | D | D |
| 77 | U | U | U | F | F | F | F | F | F | F | D | D | D | D |
| 78 | U | U | U | U | U | U | U | U | U | U | U | U | F | D |
| 79 | U | U | U | U | U | U | U | U | U | U | U | F | F | D |
| 80 | U | U | U | U | U | U | U | U | U | U | F | F | F | D |
| 81 | U | U | U | U | U | U | U | U | U | U | U | F | D | D |
| 82 | U | U | U | U | U | U | U | U | U | U | F | F | D | D |
| 83 | U | U | U | U | U | U | U | U | U | F | F | F | D | D |
| 84 | U | F | D | D | D | D | D | D | D | D | D | D | D | D |
| 85 | U | U | F | D | D | D | D | D | D | D | D | D | D | D |
| 86 | U | U | U | F | D | D | D | D | D | D | D | D | D | D |
| 87 | U | F | F | D | D | D | D | D | D | D | D | D | D | D |
| 88 | U | U | F | F | D | D | D | D | D | D | D | D | D | D |
| 89 | U | U | U | F | F | D | D | D | D | D | D | D | D | D |
| 90 | U | F | F | F | D | D | D | D | D | D | D | D | D | D |
| 91 | U | U | F | F | F | D | D | D | D | D | D | D | D | D |
| 92 | U | U | U | F | F | F | D | D | D | D | D | D | D | D |
| 93 | U | U | U | U | U | U | U | U | U | F | F | F | F | D |
| 94 | U | U | U | U | U | U | F | F | F | F | F | F | D | D |
| 95 | U | U | U | U | U | U | F | F | D | D | D | D | D | D |
| 96 | U | U | U | U | U | U | U | D | D | D | D | D | D | D |

For a serving cell of an IAB-node MT, an IAB-node MT may be provided with a number of symbols that will not be used for an IAB-node MT in a slot where an IAB-node switches between an IAB-node MT and an IAB-node DU by guard-SymbolsProvided. An SCS configuration for multiple symbols are provided by guardSymbol-SCS.

With reference to a slot of an IAB-node DU serving cell, a symbol within the slot of the IAB-node DU serving cell may be configured to hard, soft, or unavailable type. When a DL, UL, or flexible symbol is configured to hard, an IAB-node DU serving cell can transmit, receive, or transmit or receive, respectively, in the symbol.

When a DL, UL or flexible symbole is configured to soft, an IAB-node DU can transmit, receive or transmit or receive respectively on the symbol only in the following cases:

- For an IAB-node MT, an ability to transmit or receive by an IAB-node DU on a soft symbol is equal to the soft symbol being set to unavailable, or
- When an IAB-node DU detects DCI format 2_5 with an AI (availability indicator) index field value indicating a soft symbol available for transmission or reception.

If a symbol is set to unavailable, an IAB-node DU neither transmits nor receives on that symbol.

When an IAB-node DU transmits an SS/PBCH block or a periodic CSI-RS in a symbol of a slot, or receives a PRACH or an SR (scheduling request) in a symbol of a slot, the symbol of the slot is the same as being set to hard.

When an IAB-node is provided with AvailabilityIndicator, the IAB-node is provided with an AI-RNTI by 'ai-RNTI' and a payload size of DCI format 2_5 by 'dci-PayloadSize-AI'. An IAB-node is also provided with a search space set configuration for PDCCH monitoring by 'SearchSpace-IAB'.

For each serving cell of an IAB-node DU in a serving cell set of an IAB-node DU, IAB-node DUs may be provided with:

- An ID of an IAB-node DU serving cell by 'iabDuCellId-AI'
- A Position of an AI (Availability Indicator) index field of DCI format 2_5 by 'positionInDCI-AI'
- A set of availability combinations containing each availability combination by 'availabilityCombinations'
- 'resourceAvailability', indicating the availability of a soft symbol in one or more slots for an IAB-node DU serving cell, and
- Mapping of a soft symbol availability combination provided by 'AvailabilityCombination' to a corresponding AI index field value in DCI format 2_5 provided by 'AvailabilityCombinationId'.

An AI index field value of DCI format 2_5 indicates to an IAB-node DU the soft symbol availability within each slot for slots for each DL BWP or each UL BWP, starting from a slot where an IAB-node detected DCI format 2_5. The number of slots is equal to or greater than a PDCCH monitoring period for DCI format 2_5 provided by SearchSpace-IAB. An AI index field contains max{ceil(log2(maxAIindex+1)),1} bits, where maxAIindex is the maximum of values provided by the corresponding availabilityCombinationId. The availability for a soft symbol in a slot is identified by its value resourceAvailability provided in Table 9.

Table 9 illustrates the mapping of values of resourceAvailability elements and types of soft symbol availability within a slot.

[Table 9]

| Value | Indication |
|---|---|
| 0 | Soft symbols are not indicated as available |
| 1 | Only DL soft symbols are indicated as available |
| 2 | Only UL soft symbols are indicated as available. |
| 3 | Only DL and UL soft symbols are indicated as available. |
| 4 | Only flexible soft symbols are indicated as available. |
| 5 | Only DL and flexible soft symbols are indicated as available. |
| 6 | Only UL and flexible soft symbols are indicated as available. |
| 7 | DL, UL, and flexible soft symbols are indicated as available. |

If a PDCCH monitoring period for DCI format 2_5 is less than a duration of the availability combination of the soft symbol for the number of slots acquired by a UE in the PDCCH monitoring occasion for DCI format 2_5 by a corresponding AI index field, and if the UE detects one or more DCI formats 2_5 indicating the availability combination of soft symbols in a slot, the UE expects that each of one or more DCI formats 2_5 indicates the same value for the availability combination of soft symbols in the slot.

A random access preamble may be transmitted only on a time resource given by higher layer parameter prach-ConfigurationIndex according to Tables 6.3.3.2-2 to 6.3.3.2-4 defined in TS 38.211, and may vary depending on FR1 or FR2 and spectrum type as defined in TS 38.104.

For an IAB-MT portion of an IAB-node, if all higher layer parameters prach-ConfigurationFrameOffset, prach-ConfigurationPeriodScaling and prach-ConfigurationSOffset are configured, the following applies to tables 6.3.3.2-2 to 6.3.3.2-4 defined in TS 38.211.

- In Tables 6.3.3.2-2 to 6.3.3.2-4, $n_{SFN}$ mod x = y is replaced by $n_{SFN}$ mod $x_{IAB}$ = (y+$\Delta$y) mod $x_{IAB}$. Here, $\Delta$y $\in$ {0,1,...,$x_{IAB}$-1} is given by the higher layer parameter prach-ConfigurationFrameOffset. $x_{IAB}$ = $\delta$x, where $\delta$ is given by the higher layer parameter prach-ConfigurationPeriodScaling.
- A subframe number in Tables 6.3.3.2-2 to 6.3.3.2-3 and a slot number in Table 6.3.3.2-4 are replaced by ($s_n$+$\Delta$s) mod L. Here, $s_n$ is a slot or subframe number, $\Delta$s is given by the higher layer parameter prach-ConfigurationSOffset, and L is the number of subframes in a frame in Tables 6.3.3.2-2 to 6.3.3.2-3, and the number of slots in a frame in Table 6.3.3.2-4.

downlink transmission power indication of gNB (IAB-DU)

In Rel-16 NR, downlink power of a gNB is indicated in RRC according to 3GPP TS 38.331 as follows.

Table 10 illustrates ServingCellConfigCommon information element (IE).

【Table 10】

```
-- ASN1START

-- TAG-SERVINGCELLCONFIGCOMMON-START


ServingCellConfigCommon ::=          SEQUENCE {

    physCellId                       PhysCellId

OPTIONAL,    -- Cond HOAndServCellAdd,

    downlinkConfigCommon                 DownlinkConfigCommon

OPTIONAL,    -- Cond HOAndServCellAdd

    uplinkConfigCommon                   UplinkConfigCommon

OPTIONAL,    -- Need M

    supplementaryUplinkConfig        UplinkConfigCommon

OPTIONAL,    -- Need S

    n-TimingAdvanceOffset            ENUMERATED { n0, n25600, n39936 }

OPTIONAL,    -- Need S

    ssb-PositionsInBurst             CHOICE {

        shortBitmap                      BIT STRING (SIZE (4)),
```

```
                mediumBitmap                    BIT STRING (SIZE (8)),

                longBitmap                      BIT STRING (SIZE (64))

            }

    OPTIONAL, -- Cond AbsFreqSSB

        ssb-periodicityServingCell          ENUMERATED { ms5, ms10, ms20, ms40,

    ms80, ms160, spare2, spare1 }    OPTIONAL, -- Need S

        dmrs-TypeA-Position                 ENUMERATED {pos2, pos3},

        lte-CRS-ToMatchAround               SetupRelease { RateMatchPatternLTE-

    CRS }                        OPTIONAL, -- Need M

        rateMatchPatternToAddModList        SEQUENCE (SIZE

    (1..maxNrofRateMatchPatterns)) OF RateMatchPattern    OPTIONAL, -- Need N

        rateMatchPatternToReleaseList       SEQUENCE (SIZE

    (1..maxNrofRateMatchPatterns)) OF RateMatchPatternId OPTIONAL, -- Need N

        ssbSubcarrierSpacing                SubcarrierSpacing

    OPTIONAL, -- Cond HOAndServCellWithSSB

        tdd-UL-DL-ConfigurationCommon       TDD-UL-DL-ConfigCommon

    OPTIONAL, -- Cond TDD

        ss-PBCH-BlockPower                  INTEGER (-60..50),

        ...

    }
```

```
-- TAG-SERVINGCELLCONFIGCOMMON-STOP

-- ASN1STOP
```

Referring to Table 10, the ss-PBCH-BlockPower parameter indicates an average energy per RE (EPRE) of resource elements (REs) carrying secondary synchronization signals used by a network for SSB transmission in dBm (See TS 38.213 Section 7).

Table 11 illustrates the NZP-CSI-RS-Resource IE.

【Table 11】

```
-- ASN1START

-- TAG-NZP-CSI-RS-RESOURCE-START


NZP-CSI-RS-Resource ::=              SEQUENCE {

    nzp-CSI-RS-ResourceId               NZP-CSI-RS-ResourceId,

    resourceMapping                     CSI-RS-ResourceMapping,

    powerControlOffset                  INTEGER (-8..15),

    powerControlOffsetSS                ENUMERATED{db-3, db0, db3, db6}

OPTIONAL,    -- Need R

    scramblingID                        ScramblingId,

    periodicityAndOffset                CSI-ResourcePeriodicityAndOffset

OPTIONAL,    -- Cond PeriodicOrSemiPersistent
```

```
    qcl-InfoPeriodicCSI-RS                TCI-StateId

OPTIONAL,    -- Cond Periodic

    ...

}



-- TAG-NZP-CSI-RS-RESOURCE-STOP

-- ASN1STOP
```

In Table 11, the powerControlOffset parameter represents a power offset of a PDSCH RE with respect to an NZP CSI-RS RE, and is a value in dB (see TS 38.214 Section 5.2.2.3.1, Section 4.1). Additionally, the powerControlOffsetSS parameter indicates a power offset of an NZP CSI-RS RE with respect to an SSS RE, and is a value in dB (see TS 38.214 Section 5.2.2.3.1).

That is, an IAB-MT is indicatged in dBm by a strength of a transmission signal of a secondary synchronization signal transmitted by a parent IAB-DU in ss-PBCH-BlockPower (Table 10). Additionally, by receiving an offset of transmission power of a specific NZP-CSI-RS-Resource RE with the SSS RE as a dB value, an IAB-MT can infer/calculate transmission power of an NZP-CSI-RS-Resource RE transmitted by a parent IAB-DU in dBm. Additionally, by receiving an offset of transmission power of a PDSCH RE with a NZP-CSI-RS-Resource RE as a dB value, an IAB-MT can infer/calculate transmission power of a PDSCH RE transmitted by a parent IAB-DU in dBm.

DL transmission power adjustment method for IAB-MT

In the existing IAB node, a TDM (time division multiplexing) operation was performed in which a DU and a MT operate through different time resources. On the other hand, for efficient resource operation, it is required to perform resource multiplexing such as SDM (spatial division multiplexing) / FDM (frequency division multiplexing), FD (full duplexing) between a DU and a MT. As previously shown in Figure 10(b), a link between an IAB node (i.e., IAB MT) and a parent node (i.e., parent DU) is referred to as a parent link, and a link between an IAB node (i.e., IAB DU) and a child node (i.e., child MT) is referred to as a child link. Here, a TDM operation between a parent link and a child link has been previously discussed, and SDM/FDM and FD operations are being discussed.

A DU and a MT existing (or are co-located) within the same IAB node cannot operate simultaneously due to intra-node interference, slot/symbol boundary misalignment, power sharing, etc., and may operate in TDM.

On the other hand, multiplexing of SDM/FDM can be used between a DU and a MT. This is applicable, for example, when a DU and a MT use different panels and there is little interference between panels. In this case, a DU and a MT that exist (or are co-located) within the same IAB node can transmit or receive simultaneously, but it is impossible for a DU and a MT to transmit and receive, or receive and transmit, respectively, at the same time.

Alternatively, FD (Full duplexing) may be used between a DU and a MT. This can be applied in cases where there is little interference between a DU and a MT, for example, when a frequency area in which a DU operates and a frequency area in which a MT operates are far away. In this case, a DU and a MT that exist (or are co-located) within the same IAB node can freely transmit and receive simultaneously. A DU and a MT can transmit or receive simultaneously, and it is also possible for a DU and a MT to transmit and receive, respectively, or receive and transmit simultaneously.

There may be N (N is a natural number) MT-component carriers (CCs) and M DU-cells within an IAB node.

FIG. 11 illustrates multiple MT-CCs and multiple DU-cells in a wireless communication system to which the present disclosure can be applied.

Figure 11 illustrates the case where an IAB node consists of N=3 MT-CCs and M=3 DU-cells. MT-CCs in an IAB node can operate through the same or different frequency resources, and one MT-CC can be connected to one or more parent DU-cells. DU-cells within an IAB node can operate through the same or different frequency resources.

For a specific MT-CC/DU-cell pair within an IAB node, an MT-CC and a DU-cell may be in a TDM or no-TDM relationship for the following four Tx/Rx direction combinations. TDM/no-TDM may vary depending on Tx/Rx combination.

- DU-Tx / MT-Tx
- DU-Rx / MT-Rx
- DU-Tx / MT-Rx
- DU-Rx / MT-Tx

For example, for a specific MT-CC/DU-cell pair, all four Tx/Rx combinations can operate as TDM. In this case, regardless of a Tx/Rx direction of a DU-cell and an MT-CC, a DU-cell and an MT-CC must always operate in TDM.

As another example, for a specific MT-CC/DU-cell pair, all four Tx/Rx combinations may operate as no-TDM. In this case, regardless of a Tx/Rx direction of a DU-cell and an MT-CC, a DU-cell and an MT-CC can always operate simultaneously with no-TDM.

As another example, for a specific MT-CC/DU-cell pair, DU-Tx/MT-Tx and DU-Rx/MT-Rx operate as no-TDM, and DU-Tx/MT-Rx, DU-Rx/MT-Tx can operate in TDM. This corresponds to using a method that allows simultaneous operation (e.g., SDM/FDM) when Tx/Rx directions of a DU-cell and an MT-CC are the same and if Tx/Rx directions of a DU-cell and an MT-CC are the same, they can operate simultaneously. For each Tx/Rx combination, TDM/no-TDM information can be configured/determined differently/independently for each specific MT-CC/DU-cell pair within an IAB node.

Additionally, it may be considered that one IAB node is connected to two or multiple parent nodes. An IAB node may have multiple routes (redundant routes) to an IAB-donor CU. For an IAB-node operating in an SA mode, by allowing an IAB-MT to have concurrent backhaul (BH) radio link control (RLC) channels with the two parent nodes, NR DC (dual connectivity) is used to enable route redundancy in the BH. The parent node must be connected to the same IAB-donor CU-CP, which controls the establishment and release of redundant routes through these two parent nodes. Together with an IAB-donor CU, a parent node acquires the roles of master node and secondary node of IAB-MT. The NR DC framework (e.g., master cell group (MCG)/secondary cell group (SCG) related procedures) is used to configure a dual wireless link with a parent node.

Here, an IAB MT may be connected to two parent DUs using, for example, a dual-connectivity method or a dual active protocol stack based handover (DAPS-HO) method.

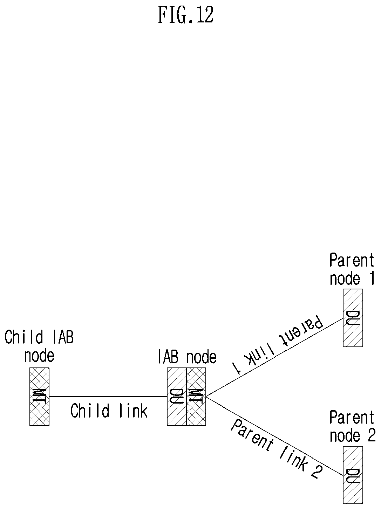

FIG. 12 illustrates a case where an IAB node is connected to parent node 1 and parent node 2 in a wireless communication system to which the present disclosure can be applied.

In this disclosure, the following is assumed for convenience of explanation.

- A MT within an IAB node (i.e., IAB (node) MT) is connected to a DU within parent node 1 (i.e., parent (node) DU1) and a DU within parent node 2 (i.e., parent (node) DU2).
- A link between Parent DU1 and an IAB MT is referred to as parent link 1, and a link between Parent DU2 and an IAB MT is referred to as parent link 2.
- A link between a DU (i.e., IAB (node) DU) within an IAB node and a child IAB node and/or an access UE is referred to as a child link.
- Parent link 1 and parent link 2 may be connected through the same or different MT-CCs within an IAB MT.
- Parent link1 and child link can operate using different time resources with TDM.
- Among MT-CCs of an IAB node, the MT-CC(s) connected to parent IAB node 1 are referred to as CG1, and the MT-CC(s) connected to parent IAB node 2 are referred to as CG2, and the MT-CC(s) connected to parent IAB node x are referred to as CGx. Alternatively, DU-cells in parent IAB node 1 connected to an IAB node are referred to as CG1, DU-cells in parent IAB node 2 are referred to as CG2, and DU-cells in parent IAB node x are referred to as CGx.

In the present disclosure, a MT may mean a MT-CC, and a DU may mean a DU-cell.

One IAB node may have multiple parent IAB nodes (i.e., may be connected), and multiple connected parent IAB nodes are connected by each other directly, single-hop, or multi-hop wireless backhaul, therefore real-time cooperation between parent nodes is impossible. Here, multiple parent IAB nodes can be connected to the same MT of an IAB node or to different MTs. Each parent IAB node can provide an AI (availability indicator) indication to a child node.

Accordingly, power control of an IAB-DU is absolutely necessary to guarantee the performance of a backhaul link, and accordingly, it was agreed to introduce desired power adjustment as assistance information of DL power control, as shown in Table 12 below.

[Table 12]

| Agreement |
| --- |
| The information to assist DL power allocation of the parent-node is indicated by the |
| IAB-MT to the parent node DU in terms of desired power adjustment.<br>FFS applicability of assistance information, e.g. per multiplexing scenario, per resource, etc. |

That is, from the perspective of desired power adjustment, information assisting DL power allocation of a parent-node may be indicated to a parent node DU by an IAB-MT.

When a parent IAB receives desired power adjustment from a child IAB-MT, it is necessary to indicate a child IAB-MT on accepting the power adjustment. If a parent IAB does not indicate, a child IAB-MT (e.g., UE) cannot know that transmission power of a parent IAB (e.g., gNB) has been lowered or increased, therefore this may affect the estimation of pathloss, etc. In other words, a child IAB-MT (e.g., UE) must indicate a UE on an amount of change in transmission power compared to a signal (e.g. SSB or CSI-RS) expected to be transmitted with constant power, but this is updated by RRC in the existing NR. However, DL power control according to simultaneous operation of IAB can be achieved dynamically. Therefore, a parent IAB (e.g., gNB) needs to dynamically inform a child IAB-MT (e.g., UE) that DL transmit power has changed through dynamic signaling (e.g. MAC-CE or DCI, etc.).

Considering desired power adjustment for DL power control (PC: power control) according to a multiplexing scenario, it is as follows.

- Multiplexing case B (MT Rx + DU Rx): (depending on implementation) For the purpose of limiting a received power level within a certain range to ensure stability of automatic gain control (AGC) operation, prevent quantization distortion, and ensure linearity of an amplifier, a child IAB-MT (e.g., UE) may request desired power adjustment.
- Multiplexing case D (MT Rx + DU Tx): There are signals in which a child link expects transmission power to remain unchanged, such as SSB and a CSI-RS in DL. These signals may exist as signal interference (SI) at a large power level in a MT Rx. Accordingly, a child IAB-MT (e.g., UE) may request to boost a power level of a signal received from a parent.

Unlike UL PC, the multiplexing case B may be a request to increase or lower transmission power of a parent DU, and the multiplexing case D may be a request to increase transmission power of a parent DU. Therefore, a method that considers applying assistance information according to the multiplexing scenario is proposed. Here, an application range of desired power adjustment for DL power control may not be applied to a cell-specific signal, but may be applied only to a UE-specific signal. This is because a cell-specific signal affect overall cell coverage.

For convenience of explanation, this disclosure describes power control of an IAB-DU based on a request of a IAB-MT, however even without a request from a IAB-MT, IAB-DI's power control can be equally applied. That is, in this disclosure, an operation related to an IAB-MT request can be selectively applied.

In addition, even if not specifically described in the present disclosure, an IAB-MT may be replaced by a UE and an IAB-DU may be replaced by a gNB.

In addition, in this disclosure, proposed methods are mainly described for single panel/single RF IAB for convenience of explanation, but this disclosure is not limited thereto. In other words, the methods proposed in this disclosure can be applied to single panel/multi RF, multi panel/single RF, and multi panel/multi RF environments.

In the present disclosure, "A or B" may mean "only A," "only B," or "both A and B." In other words, in the present disclosure, "A or B" may be interpreted as "A and/or B." For example, in this disclosure, "A, B or C" may mean "only A," "only B," "only C," or "any and all combinations of A, B, and C".

The slash (/) or comma used in this disclosure may mean "and/or." For example, "A/B" can mean "A and/or B." Accordingly, "A/B" can mean "only A," "only B," or "both A and B." For example, "A, B, C" can mean "A, B, or C."

In the present disclosure, "at least one of A and B" may mean "only A," "only B," or "both A and B." In addition, in the present disclosure, the expression "at least one of A or B" or "at least one of A and/or B" can be interpreted to be equivalent to "at least one of A and B.".

In addition, in the present disclosure, "at least one of A, B and C" may mean "only A", "only B", "only C", or "any combination of A, B and C". Additionally, "at least one of A, B or C" or "at least one of A, B and/or C" may mean "at least one of A, B and C."

Additionally, parentheses used in the present disclosure may mean "for example." Specifically, when "control information (PDCCH)" is indicated, "PDCCH" may be proposed as an example of "control information.". In other words, in the present disclosure, "control information" is not limited to "PDCCH" and "PDDCH" may be proposed as an example of "control information." Additionally, even when "control information (i.e., PDCCH)" is indicated, "PDCCH" may be proposed as an example of "control information."

Technical features described individually in one drawing in the present disclosure may be implemented individually or simultaneously.

An IAB-MT's DL power control request may be made as a desired power adjustment. The present disclosure describes a method of whether to request this based on a certain resource or multiplexing scenario, a method in which a parent IAB-DU that has received a request indicates an IAB-MT when accepting and applying such the request, a behavior of an IAB-MT upon receiving the indication, etc.

The methods proposed in the present disclosure described below can be extended and applied to a UE for an IAB-MT and a gNB and a base station for an IAB-DU.

Embodiment 1) Method of requesting desired power adjustment for downlink of IAB-MT

An IAB-MT may consider the following as a method of requesting desired power adjustment of downlink (i.e., request for power adjustment of downlink transmission) to a parent IAB-DU. For example, in an IAB-MT, a request for desired power adjustment by the method described below can be transmitted through a MAC-CE/UCI, etc.

Method 1) An IAB-MT may request desired power adjustment from a parent IAB-DU for each resource (at a resource level). That is, an IAB-MT can transmit a request for downlink transmission power adjustment for each resource (at a resource level). In other words, when an IAB-MT requests desired power adjustment from a parent IAB-DU, it can transmit including information on a resource for which the desired power adjustment is requested.

Here, a resource may mean any resource from which IAB-MT receives a signal. For example, it may mean an NZP-CSI-RS resource, which is an RS-based resource, or may mean a time domain and/or frequency domain (and/or spatial domain) resource. In other words, it may mean a resource as a unit through which a specific channel/signal is transmitted or may mean a resource as a unit in a time/frequency/space domain, such as slot/symbol/RB/subcarrier/BWP/layer.

When an IAB-MT requests power adjustment for a specific resource in the above-described manner and a parent IAB-DU is expected to receive it or perform power adjustment according to the request, the IAB-MT can expect the transmission power to change for the corresponding resource. For example, if an IAB-MT requests power adjustment for a specific CSI-RS resource, and then a parent IAB-DU indicates that it has received it (e.g., indication in a form of an ACK, etc.), the IAB-MT can expect the parent IAB-DU to perform power control (i.e. power adjustment) only for the corresponding CSI-RS resource. Alternatively, when a IAB-MT requests power adjustment for a specific CSI-RS resource, for a duration where a parent IAB-DU is expected to perform power control, an IAB-MT can expect the parent IAB-DU to perform power control only for the corresponding CSI-RS resource.

Alternatively, when an IAB-MT requests power adjustment for a specific resource and a parent IAB-DU is expected to receive it or perform power adjustment accordingly, the IAB-MT can expect transmission power to change not only for this resource but also for other resources. For example, if an IAB-MT requests power adjustment for a specific CSI-RS resource, and a parent IAB-DU subsequently indicates that it has received it (e.g., an indication in a form of an ACK, etc.), the IAB-MT can expect the parent IAB-DU to perform power control for not only on the corresponding CSI-RS resource (i.e., the requested resource) but also on other resources or for all signals/channels except signals expected to be transmitted at constant power thereafter. Alternatively, when an IAB-MT requests power adjustment for a specific CSI-RS resource, for a duration where a parent IAB-DU is expected to perform power control, the IAB-MT can expect the parent IAB-DU to perform power control for not only on the corresponding CSI-RS resource (i.e., the requested resource) but also on other resources or for all signals/channels except signals expected to be transmitted with constant power thereafter.

Method 2) An IAB-MT may request desired power adjustment from a parent IAB-DU for each multiplexing scenario (e.g., multiplexing mode) (i.e. DU-Tx/MT-Tx, DU-Rx/MT-Rx, DU-Tx/MT-Rx, DU-Rx/MT-Tx). That is, an IAB-MT may transmit a request for downlink transmission power adjustment for each multiplexing scenario (e.g., multiplexing mode).

In other words, when an IAB-MT requests desired power adjustment from a parent IAB-DU, it may transmit including information on the multiplexing scenario (e.g., multiplexing mode) for which desired power adjustment is requested.

Here, IAB-MT requesting power adjustment for each multiplexing scenario may mean the following. By prior agreement, multiplexing scenarios are mapped to specific time resources and/or frequency resources and/or beam (or space) resources, and power adjustment for each multiplexing scenario can be requested based on this mapping. Here, mapping the multiplexing scenario for a specific time duration means, for example, that the multiplexing scenario of IAB may be mapped according to the slot index n where IAB-MT requested power adjustment and a parent IAB-DU may adjust transmission power of the parent IAB-DU at the time when a specific multiplexing scenario of IAB is applied based on slot index n. In this case, an IAB-MT may transmit along with a request for power adjustment, specific time/frequency/space resource information at which power adjustment will be applied (or application will begin).

Alternatively, power adjustment reported at the time when an IAB node is applying a first multiplexing scenario

EP 4 383 841 A1

may be applied only to a specific second multiplexing scenario of the IAB node (here, a first multiplexing scenario may be the same as or different from a second multiplexing scenario). For example, if an IAB-MT requests desired power control for DL in a time duration operating as simultaneous Tx-Tx, a parent IAB-DU can understand/consider that the desired power control is a power control request for a time duration in which an IAB-MT operates as simultaneous Rx-Rx. As another example, when an IAB-MT requests desired power control for DL in a time duration operating as simultaneous Tx-Rx (MT-Tx/DU-Rx), a parent IAB-DU can understand/consider that the desired power control is a power control request for a time duration in which the IAB-MT operates as simultaneous Rx-Tx (MT-RX/DU-Tx).

Here, mapping a multiplexing scenario to a specific beam resource means, for example, that an IAB's multiplexing scenario may be mapped according to the CSI-RS resource ID M (M is a natural number) for which an IAB-MT requested power adjustment, and a parent IAB-DU adjusts transmission power of the parent IAB-DU at the time when a specific multiplexing scenario of IAB is applied based on CSI-RS resource ID M.

When an IAB-MT requests DL power adjustment by the method described above (e.g., method 1, method 2), depending on the current (i.e., before adjustment) transmission power level of a parent IAB-DU, it can be determined whether a request for DL power adjustment (i.e., transmission of the request) is possible or not.

For example, an IAB-MT may determine that transmission power adjustment of a parent IAB-DU is possible or impossible depending on the value based on the powerControlOffsetSS value of NZP-CSI-RS-Resource IE (see Table 11 previously). For example, if powerControlOffsetSS is indicated with the lowest value (currently db-3, but can be expanded in the future, for example db-10, etc.), for the corresponding CSI-RS resource, in a group of CSI-RS resources, or for a specific multiplexing scenario, an IAB-MT may determine that a parent IAB-DU is unable to perform power adjustment and may not request DL power adjustment. Alternatively, an IAB-MT may consider requesting power control based on the value. For example, when the powerControlOffsetSS currently indicated in a specific NZP-CSI-RS-Resource is db0, IAB-MT can directly report the powerControlOffsetSS of the corresponding NZP-CSI-RS-Resource as the desired value (for example, db3) among candidates. Due to the mapping relationship, a power control adjustment request can mean/indicate one value of powerControlOffsetSS.

An IAB-MT may determine that DL power adjustment cannot be requested if the list of powerControlOffsetSS has db-3, db0, db3, and db6, such as Rel-16. Alternatively, if the list of powerControlOffsetSS has an expanded number and/or finer granularity (e.g., db-9, db-6, db-3, db0, db3, db6, db9, etc.), it may be determined that DL power adjustment can be requested. In other words, an IAB-MT can determine the possibility of requesting DL power adjustment based on the list of powerControlOffsetSS, and conversely a parent IAB-DU may configure a value (i.e., a different list) different from Rel-16 of powerControlOffsetSS for an IAB-MT only if it supports DL power adjustment.

As described above, only when an IAB-MT determines that it is possible to transmit a request for power adjustment of downlink transmission based on a power level of downlink transmission, the IAB-MT can transmit a request for power adjustment of downlink transmission to a parent IAB-DU.

When an IAB-MT requests downlink power control adjustment from a parent IAB-DU using the above-described method (e.g., methods 1 and 2), the IAB-MT may request power control based on transmission power of an SSB or may also indicate a CSI-RS resource index or an index of a group of CSI-RS. In addition, an IAB-MT can expect power control over the reported resource.

When an IAB-MT requests downlink power control adjustment from a parent IAB-DU using the above-described method (e.g., methods 1 and 2), an association between a desired power adjustment request and a slot index needs to be established. Additionally, an association needs to be established not only for a desired power adjustment request but also for a range of a UL power spectral density (PSD) of a desired IAB-MT. Additionally, an association needs to be established between a desired power adjustment request requested by an IAB-MT and desired power adjustment provided by a parent IAB. In all cases, an association with a slot index can consider the following cases:

Case 1) When an IAB-MT's request for desired DL Tx power adjustment is associated with a slot index (i.e., when indicated together with a slot index), an IAB-MT may determine that a desired DL Tx power adjustment request can be accepted only for a corresponding slot index (i.e., DL power adjustment applies only to slots with the indicated slot index). Since a period of the indication is very short, if it is determined that an IAB-MT performs a request for desired DL Tx power adjustment with a slot index and the request will be accepted only for that slot index, the corresponding request from an IAB-MT is performed through UCI, and the corresponding DL Tx power update of a parent IAB node can also be performed through DCI.

Case 2) When an IAB-MT's request for desired DL Tx power adjustment is associated with a slot index (i.e., when indicated together with a slot index), an IAB-MT may determine that a desired DL Tx power adjustment request can be accepted for the following time from the slot index (i.e., DL power adjustment is applied from the corresponding slot index to subsequent time). Here, a valid period from the corresponding slot index can be determined through prior agreement or configured by a parent IAB node. For example, it can be applied until a multiplexing mode of an IAB node is changed, or, if an IAB node is currently performing a TDM operation, until it is changed to a no-TDM operation, or if an IAB node is currently performing a no-TDM operation, until it is changed to a TDM operation, etc. Alternatively, regardless of such agreement/configuration, an IAB-MT can expect that it will be applied continuously from the slot index. Regardless of whether a validity period is configured or not, the corresponding request from IAB-MT can be performed through a MAC-CE (or UCI), accordingly, a DL Tx power update of a parent IAB node can also be performed using a MAC-CE (or DCI).

Case 3) When an IAB-MT's request for desired DL Tx power adjustment is associated with a slot index (i.e., when indicated together with a slot index), an IAB-MT may periodically determine that a desired DL Tx power adjustment request can be accepted only for the corresponding slot index (i.e., DL power adjustment is periodically applied to slots with the indicated slot index). A period to which the slot index is applied can be determined through prior agreement or configured by a parent IAB node. For example, a subframe may be configured to the period, or a period by UL/DL configuration may be configured to the corresponding period. Alternatively, it may be considered that a multiplexing mode of an IAB node is configured periodically, and a slot index may be applied for each such period. An IAB-MT request by the above method can be performed through UCI/MAC-CE, and a corresponding DL Tx power update of a parent IAB node can also be performed through DCI/MAC-CE.

Embodiment 2) Operation of parent IAB-DU according to desired power adjustment request for downlink of IAB-MT

When a parent IAB receives the desired power adjustment from a child IAB-MT according to the same method as Embodiment 1 above, the parent IAB may indicate the child IAB-MT on accepting the power adjustment. If not indicated, the child IAB-MT cannot know that the parent IAB's transmission power has been lowered or higher, which may affect the estimation of pathloss. In other words, a parent IAB needs to indicate a child IAB-MT on an amount of change in transmission power compared to a signal (e.g., SSB or CSI-RS, etc.) that the child IAB-MT expects to be transmitted with constant power, but it is updated by RRC in the existing NR. However, DL power control according to the simultaneous operation of IAB can be done dynamically, therefore, it is necessary for a parent IAB to dynamically inform a child IAB-MT about changes in DL transmit power through MAC-CE or DCI.

Embodiment 2-1) indication of parent IAB-DU

A parent IAB-DU may indicate to an IAB-MT that it has received a DL power control (i.e., adjustment) request from the IAB-MT. That is, the IAB-MT can receive information to notify that it has received the DL power control (i.e. adjustment) request from the Parent IAB-DU. However, this indication does not mean that power control of a parent IAB-DU has been applied or that transmission power has been changed. In other words, a IAB-MT can be notified that a parent IAB-DU has received the IAB-MT's power control request.

The reason why this operation is necessary is that, when an IAB-MT requests power control but the IAB-MT does not know whether an IAB-DU is received, the IAB-MT may determine that the IAB-DU did not recognize that the IAB-MT needs power control. Accordingly, the IAB-MT may request continuous power control, and as a result, unnecessary signaling may continue to occur. Therefore, a parent IAB-DU can transmit to an IAB-MT via RRC/MAC-CE/DCI, etc., that it has received a request for desired power control from the IAB-MT requesting adjustment for the downlink power it transmits. As a way to transmit that a request has been received, an explicit indication can be used. For example, similar to a HARQ-ACK technique, it can be indicated with 1 bit that a request has been received. Alternatively, it may be provided implicitly based on agreed/predefined rules in advance.

This operation of indicating that a parent IAB-DU has received an IAB-MT's DL power control request may mean that the IAB-MT does not request DL power control for a specific time period (time duration predefined or configured by parent IAB-DU) after the indication. For example, an indication that an IAB-DU's DL power control request has been received may mean that an IAB-MT disables a DL power control request for N (N is a natural number) slots or M (M is a natural number) subframes, etc. based on the slot for which IAB-MT requested DL power control. That is, during the time period, an IAB-MT cannot transmit another DL power control request to a parent IAB-DU.

Embodiment 2-2) Method for indicating DL transmission power change/adjustment of parent IAB-DU

In response to IAB-MT's DL power control request (i.e. request for power adjustment of downlink transmission) or even if the request is not received, a parent IAB-DU can change a DL power level transmitted to an IAB-MT (i.e. power adjustment). That is, a Parent IAB-DU can transmit control information for power adjustment of downlink transmission to an IAB-MT. Here, control information can be transmitted even without a request for power adjustment of downlink transmission of an IAB-MT. This is because a DL power control request does not mandate a specific operation of a parent IAB-DU.

Since IAB can apply various multiplexing scenarios and various timing cases, power control (adjustment) requests can be dynamically requested through UCI/MAC-CE. In addition, even if it is not based on the IAB-MT's request, it is highly likely that a parent IAB-DU will need to quickly change DL power. However, currently indicating DL power is performed only through RRC signaling as described above, and therefore, improvement is needed.

A parent IAB-DU can update information/value (e.g., energy (EPRE) ratio/offset for each RE, value indicating relative power compared to SSB, etc.) indicating transmission power compared to a strength of a signal transmitted with constant power, such as an SSB (e.g. SSB, CSI-RS, etc.) through lower layer signaling (e.g. MAC-CE or DCI). That is, control information for power adjustment of downlink transmission may include information (e.g., energy (EPRE) ratio/offset for each RE, value indicating relative power compared to SSB, etc.) indicating transmission power compared to a strength of a signal transmitted at constant power (e.g. SSB, CSI-RS, etc.).

For such an update, it may be considered to indicate a single value and update by calculating from that value, or to update by indicating all (possible) corresponding values. For example, if a parent IAB-DU indicates a single value delta for the purpose of updating a transmission power strength, this can update values indicating transmission power for a specific resource or multiple resources by prior agreement or promise (or configuration by a parent IAB-DU).

An indication according to a change in DL transmission power (i.e., adjustment) of the parent IAB-DU may be given based on SSB power, or may be given based on a specific CSI-RS or group of CSI-RS. Additionally, when indicating an update of the corresponding value, updating by indicating an index of a CSI-RS or updating by indicating an index of a group of CSI-RS can be considered. For example, a parent IAB-DU may indicate i) an index of a CSI-RS (or an index of an CSI-RS group) and ii) information/value indicating DL transmit power relative to transmit power of a CSI-RS (or CSI-RS group) (e.g., EPRE ratio/offset in dB, etc.) to an IAB-MT through lower layer signaling (e.g. MAC-CE or DCI) (i.e. control information for power adjustment of downlink transmission). In this case, an IAB-MT can calculate/derive DL transmission power (e.g., EPRE of downlink transmission) based on i) transmit power of the CSI-RS with the index of the CSI-RS (or the index of an CSI-RS group) and ii) the information indicating DL transmit power relative to transmit power of the CSI-RS (or CSI-RS group) (e.g., EPRE ratio/offset in dB, etc.) indicated by lower layer signaling (e.g., MAC-CE or DCI).

An update (i.e., adjustment) of DL transmission power change (or update of DL transmission power change (i.e. adjustment) of a parent IAB node without a desired downlink power request of an IAB node), which is a parent IAB node's response to a desired downlink power request of an IAB node described above, may be limited to and applied to a specific resource. For example, it can be considered to apply an update of DL transmission power change in a limited way to a time resource. When a parent IAB updates transmission power with downlink signaling (e.g., MAC-CE or DCI) using the above method, it can indicate a set of time resources or a set of time resources together for the specific time resource (e.g. slot index, subframe index, time domain Hard/Soft/NA(non-available), etc.). Here, when a parent IAB node indicates the time resource, if time domain Hard/Soft/NA is indicated, since the resource indicated as Hard is used by a DU of an IAB-node, the IAB node can expect that the parent IAB node will not change DL Tx power for the time resource indicated as Hard. In other words, if a parent IAB node indicates a change in DL Tx power and time domain H/S/NA, by prior agreement, etc. (or by configuration of a parent IAB node), an IAB node can expect DL Tx power to be changed only for i) Soft and NA resources or ii) an NA resource. As described above, a parent IAB node may indicate that DL Tx power has been changed for a specific time resource index or a set of specific time resource indexes, DL transmission can be performed with DL Tx power that is not updated on time resources other than the specific time resource index or set of specific time resource indexes indicated in this way. Therefore, an IAB node can expect DL Tx power to change only for the indicated time resource or set of indicated time resources, and can expect that DL Tx power will not change for unindicated time resources or sets of unindicated time resources.

Embodiment 3) Operation of IAB-MT according to grant of parent IAB-DU

When an update of DL transmission power change (i.e. adjustment) is received from a parent IAB-DU by the method of Embodiment 2 above, etc. based on (or considering or applying) the update of the corresponding DL transmission power change (i.e. adjustment), an IAB-MT can report CSI related to the CSI-RS resource (or CSI-RS resource group) indicated in the update of the corresponding DL transmission power change (i.e., adjustment).

For example, when lower layer signaling (e.g., MAC-CE/DCI, etc.) indicates that a parent IAB-DU has changed DL power by the method of Embodiment 2, etc., an IAB-MT can update or reset a time window for RSRP reporting. Alternatively, if a parent IAB-DU indicates that DL power has been changed through lower layer signaling (e.g., MAC-CE/DCI, etc.), this may mean that it indicates reporting of IAB-MT's RSRP or differential RSRP. In this case, when a parent IAB-DU indicates that power control has been performed on a specific resource, that is, on a specific CSI-RS, it can be applied only to the corresponding CSI-RS (i.e., CSI-RS resource specified within the indication for power control).

When an IAB-MT indicates through lower layer signaling (e.g., MAC-CE/DCI, etc.) that a parent IAB-DU has changed DL power for a specific CSI-RS by the above method, etc., a time window for CSI-RSRP reporting of the corresponding CSI-RS can be updated or reset. Alternatively, if a parent IAB-DU indicates through lower layer signaling (e.g., MAC-CE/DCI, etc.) that DL power has been changed for a specific CSI-RS, this may mean that it indicates reporting of CSI-RSRP or differential CSI-RSRP of the corresponding CSI-RS of an IAB-MT.

In the above, RSRP reporting refers to L1 (layer 1) reporting, and a time window refers to filtering for L1 reporting. In other words, updating or resetting a time window means performing filtering to report L1 using only a CSI-RS received after an IAB-DU indicates that DL power has been changed.

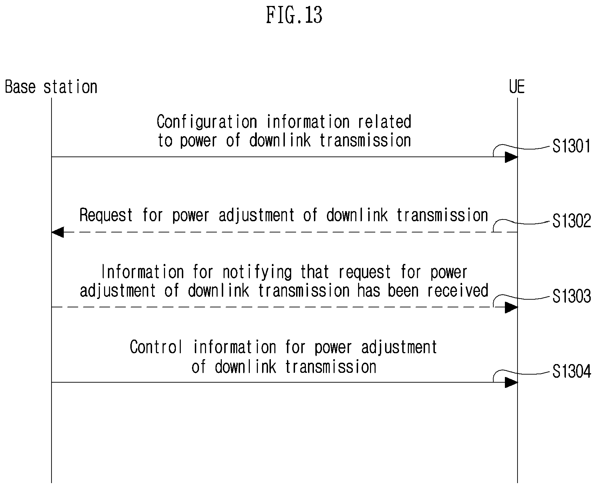

FIG. 13 is a diagram illustrating a signaling procedure between a base station and a UE for a downlink power adjustment method according to an embodiment of the present disclosure.

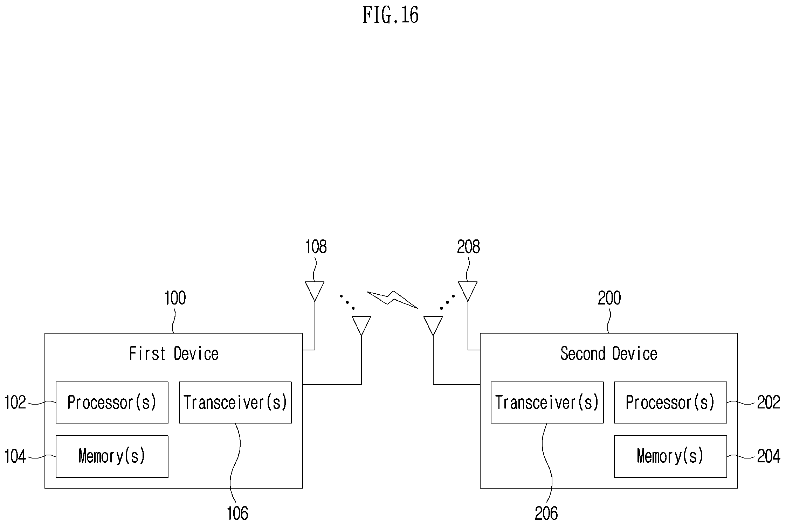

FIG. 13 illustrates a signaling procedure between a terminal (user equipment, UE) and a base station (BS) based on the methods proposed above (e.g., any one or a combination of Embodiments 1 to 3 and their detailed examples). The example of FIG. 13 is for convenience of description and does not limit the scope of the present disclosure. Some step(s) illustrated in FIG. 13 may be omitted depending on circumstances and/or configurations. In addition, a base station and a UE in FIG. 13 are just one example, and may be implemented as a device illustrated in FIG. 16 below. For example, the processor (102/202) of FIG. 16 may control to transmit/receive channels/signals/data/information, etc. using the transceiver (106/206), and may control to store transmitted or received channels/signals/data/information, etc. in the memory (104/204).

In addition, in an operation between a base station and a UE in FIG. 13, the proposed method described above (e.g., any one or a combination of Embodiments 1 to 3 and their detailed examples) can be referenced/applied even if there is no separate description.

A base station may be a general term for objects that transmit and receive data to and from a terminal. For example, a base station may be a concept including one or more transmission points (TPs), one or more transmission and reception points (TRPs), etc. Also, a TP and/or a TRP may include a panel of a base station, a transmission and reception unit, etc. In addition, "TRP" refers to a panel, an antenna array, a cell (e.g., macro cell / small cell / pico cell, etc.), It may be substituted with expressions such as TP (transmission point), base station (base station, gNB, etc.) and applied. As described above, TRPs may be classified according to information (e.g., index, ID) on a CORESET group (or CORESET pool). For example, when one terminal is configured to transmit/receive with multiple TRPs (or cells), this may mean that multiple CORESET groups (or CORESET pools) are configured for one terminal. Configuration of such a CORESET group (or CORESET pool) may be performed through higher layer signaling (e.g., RRC signaling, etc.).

Referring to FIG. 13, for convenience of description, signaling between one base station and a terminal is considered, but the corresponding signaling scheme may be extended and applied to signaling between multiple TRPs and multiple terminals. In the following description, a base station may be interpreted as one TRP. Alternatively, a base station may include a plurality of TRPs, or may be one cell including a plurality of TRPs.

In particular, in FIG. 13, a base station may correspond to an IAB node (i.e., IAB-DU) and may also be referred to as a parent IAB node (i.e., parent IAB-DU). Additionally, a UE may correspond to an IAB-node (i.e., IAB-MT) and may also be referred to as a child IAB node (i.e., child IAB-DU).

Referring to FIG. 13, a UE receives configuration information related to downlink transmission power from a base station (S1301). That is, a base station transmits configuration information related to downlink transmission power to a UE.

Here, the configuration information related to the downlink transmission power may include the configuration information described in the proposed method described above (e.g., any one or a combination of Embodiments 1 to 3 and their detailed examples).

For example, the configuration information related to the downlink transmission power may include first configuration information related to a serving cell and second configuration information related to a CSI-RS resource.

Here, the first configuration information may include information ([dBm]) on energy per resource element (EPRE) of an SSS used for SSS transmission. For example, the first configuration information may correspond to ServingCell-ConfigCommon IE.

Additionally, the second configuration information may include information ([dB]) on a power offset of EPRE of a CSI-RS resource (hereinafter referred to as a first power offset) compared to EPRE for an SSS. For example, the second configuration information may correspond to NZP-CSI-RS-Resource IE.

A UE may transmit a request for power adjustment of downlink transmission to a base station (S1302). That is, a base station can receive a request for power adjustment of downlink transmission from a UE.

As described above, a base station can perform power control (adjustment) for downlink transmission even if there is no request for power adjustment of downlink transmission from a UE. That is, step S1302 may be omitted, and regardless of this, step S1304 described later may be performed.

Alternatively, a base station may perform power control (adjustment) described later in response to a request for power adjustment of downlink transmission from a UE (step S1304).

Here, the request for power adjustment of downlink transmission may include information on the resource (e.g. a time/frequency/spatial resource, or a resource of a specific channel/signal) or multiplexing mode (i.e. DU-Tx/MT-Tx, DU-Rx/MT-Rx, DU-Tx/MT-Rx, DU-Rx/MT-Tx) for which power adjustment is requested.

In addition, only when a UE terminal determines that transmission of a request for power adjustment of downlink transmission is possible based on a power level of the downlink transmission of a base station, the UE may transmit a request for power adjustment of the downlink transmission to the base station.

A UE may receive information indicating that a request for power adjustment of downlink transmission has been received from a base station (S1303). That is, a base station can transmit information to inform a UE that it has received a request for power adjustment of downlink transmission.

As described above, step S1302 can be omitted, therefore if step S1302 is omitted, step S1303 is also omitted.

Alternatively, even if step S1302 is performed, step S1303 may be omitted. That is, control information for adjusting power of downlink transmission may be transmitted in response to a request for adjusting power of downlink transmission from a UE, and in this case, the UE can confirm/recognize that a base station has received a request for power adjustment of downlink transmission.

A UE receives control information for power adjustment (i.e., update) of downlink transmission from a base station (S1304). That is, a base station transmits control information for power adjustment (i.e., update) of downlink transmission to a UE.

Here, control information may be transmitted through lower layer signaling (e.g., MAC CE, DCI, etc.). For example, it may be DL transmission (Tx) power adjustment MAC CE.

The control information may include resource information (e.g., SSB, index of CSI-RS resource, etc.) related to power adjustment of downlink transmission. Additionally, the control information may include information on a power offset (hereinafter referred to as a second power offset) of power (e.g., EPRE) of downlink transmission relative to a resource (e.g. SSB, index of CSI-RS resources, etc.) related to power adjustment of downlink transmission. In this case, based on the second power offset, power (e.g., EPRE) of downlink transmission may be derived from power (e.g., EPRE) of a resource related to power adjustment of downlink transmission (e.g. SSB, index of CSI-RS resources, etc.).

Additionally, control information for power adjustment of downlink transmission may include a time resource (e.g. slot index, subframe index, etc.), a frequency resource (e.g. RB index, etc.), and/or a spatial resource (e.g., layer index, etc.) on which power adjustment is to be performed. In this case, power adjustment of downlink transmission indicated by control information can be applied only to the corresponding time/frequency/spatial resource.

Alternatively, control information for power adjustment of downlink transmission may include information on a channel/signal (e.g., PDSCH, PDCCH, CSI-RS, etc.) on which power adjustment is to be performed. In this case, power adjustment of downlink transmission indicated by control information can be applied only to the corresponding channel/signal.

Meanwhile, although not shown, when performing CSI reporting on a CSI-RS resource indicated by control information for power adjustment of downlink transmission, a UE may perform CSI-RS reporting based on the control information. For example, when transmission power of a PDSCH is adjusted (updated) compared to a specific CSI-RS resource by control information for adjusting power of downlink transmission, when reporting CSI based on the specific CSI-RS, a UE can calculate a CQI based on the adjusted (updated) PDSCH transmission power and report it by including it in the CSI.

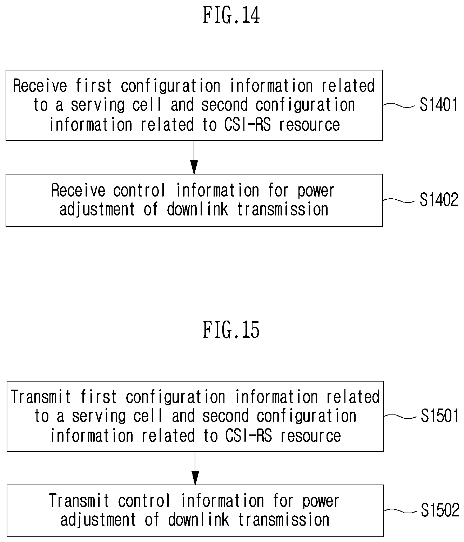

FIG. 14 is a diagram illustrating an operation of a UE for the downlink power adjustment method according to an embodiment of the present disclosure.

FIG. 14 illustrates an operation of a UE based on the methods proposed above (e.g., any one or a combination of Embodiments 1 to 3 and their detailed examples). The example of FIG. 14 is for convenience of description and does not limit the scope of the present disclosure. Some step(s) illustrated in FIG. 14 may be omitted depending on circumstances and/or configurations. In addition, a UE in FIG. 14 is just one example, and may be implemented as a device illustrated in FIG. 16 below. For example, the processor (102/202) of FIG. 16 may control to transmit/receive channels/signals/data/information, etc. (e.g. RRC signaling, MAC CE, DCI for UL/DL scheduling, SRS, PDCCH, PDSCH, PUSCH, PUCCH, etc.) using the transceiver (106/206), and may control to store transmitted or received channels/signals/data/information, etc. in the memory (104/204).

In particular, in FIG. 14, a base station may correspond to an IAB node (i.e., IAB-DU) and may also be referred to as a parent IAB node (i.e., parent IAB-DU). Additionally, a UE may correspond to an IAB-node (i.e., IAB-MT) and may also be referred to as a child IAB node (i.e., child IAB-DU).

A UE receives first configuration information related to a serving cell and second configuration information related to a CSI-RS resource from a base station (S1401).

Here, the first configuration information may include information ([dBm]) on energy per resource element (EPRE) of an SSS used for SSS transmission. For example, the first configuration information may correspond to ServingCell-ConfigCommon IE.

Additionally, the second configuration information may include information ([dB]) on a power offset of EPRE of a CSI-RS resource (hereinafter referred to as a first power offset) compared to EPRE for an SSS. For example, the second configuration information may correspond to NZP-CSI-RS-Resource IE.

A UE receives control information for power adjustment (i.e., update) of downlink transmission from a base station (S1402).

Here, control information may be transmitted through lower layer signaling (e.g., MAC CE, DCI, etc.). For example, it may be DL transmission (Tx) power adjustment MAC CE.

The control information may include resource information (e.g., SSB, index of CSI-RS resource, etc.) related to power adjustment of downlink transmission. Additionally, the control information may include information on a power offset (hereinafter referred to as a second power offset) of power of downlink transmission (e.g., EPRE) compared to a resource (e.g. SSB, index of CSI-RS resources, etc.) related to power adjustment of downlink transmission. In this case, based on a second power offset, power (e.g., EPRE) of downlink transmission may be derived from power (e.g. EPRE) of a resource (e.g. SSB, index of CSI-RS resources, etc.) related to power adjustment of downlink transmission.

Additionally, control information for power adjustment of downlink transmission may include a time resource (e.g. slot index, subframe index, etc.), a frequency resource (e.g. RB index, etc.), and/or a spatial resource (e.g., layer index, etc.) on which power adjustment is to be performed. In this case, power adjustment of downlink transmission indicated by control information can be applied only to the corresponding time/frequency/spatial resource.

Alternatively, control information for power adjustment of downlink transmission may include information on a channel/signal (e.g., PDSCH, PDCCH, CSI-RS, etc.) on which power adjustment is to be performed. In this case, power adjustment of downlink transmission indicated by control information can be applied only to the corresponding channel/signal.

Meanwhile, although not shown, a UE may transmit a request for power adjustment of downlink transmission to a base station, and in response to this, may receive control information for power adjustment of downlink transmission. Here, a request for power adjustment of downlink transmission may include information on a resource (e.g. a time/frequency/space resource, or a resource of a specific channel/signal) or multiplexing mode (i.e. DU-Tx/MT-Tx, DU-Rx/MT-Rx, DU-Tx/MT-Rx, DU-Rx/MT-Tx) for which power adjustment is requested. In addition, only when a UE determines that it is possible to transmit a request for downlink transmission power adjustment based on a power level of downlink transmission of a base station, the UE may transmit a request for power adjustment of the downlink transmission to the base station.

In addition, although not shown, a UE may transmit a request for power adjustment of downlink transmission to a base station, and in response to this, may receive information indicating that a request for power adjustment of downlink transmission has been received from the base station. Additionally, a UE can receive control information for adjusting power of downlink transmission from a base station.

In addition, although not shown, when performing CSI reporting on a CSI-RS resource indicated by control information for power adjustment of downlink transmission, a UE may perform CSI-RS reporting based on the control information. For example, when transmission power of a PDSCH is adjusted (updated) compared to a specific CSI-RS resource by control information for adjusting power of downlink transmission, when reporting CSI based on the specific CSI-RS, a UE can calculate a CQI based on the adjusted (updated) PDSCH transmission power and report it by including it in the CSI.

FIG. 15 is a diagram illustrating an operation of a base station for a downlink power adjustment method according to an embodiment of the present disclosure.

FIG. 15 illustrates an operation of a base station based on the methods proposed above (e.g., any one or a combination of Embodiments 1 to 3 and their detailed examples). The example of FIG. 15 is for convenience of description and does not limit the scope of the present disclosure. Some step(s) illustrated in FIG. 15 may be omitted depending on circumstances and/or configurations. In addition, a base station in FIG. 15 is just one example, and may be implemented as a device illustrated in FIG. 16 below. For example, the processor (102/202) of FIG. 16 may control to transmit/receive channels/signals/data/information, etc. (e.g. RRC signaling, MAC CE, DCI for UL/DL scheduling, SRS, PDCCH, PDSCH, PUSCH, PUCCH, etc.) using the transceiver (106/206), and may control to store transmitted or received channels/signals/data/information, etc. in the memory (104/204).

In particular, in FIG. 15, a base station may correspond to an IAB node (i.e., IAB-DU) and may also be referred to as a parent IAB node (i.e., parent IAB-DU). Additionally, a UE may correspond to an IAB-node (i.e., IAB-MT) and may also be referred to as a child IAB node (i.e., child IAB-DU).

A base station transmits first configuration information related to a serving cell and second configuration information related to a CSI-RS resource to a UE (S1501).

Here, the first configuration information may include information ([dBm]) on energy per resource element (EPRE) of an SSS used for SSS transmission. For example, the first configuration information may correspond to ServingCell-ConfigCommon IE.

Additionally, the second configuration information may include information ([dB]) on a power offset of EPRE of a CSI-RS resource (hereinafter referred to as a first power offset) compared to EPRE for an SSS. For example, the second configuration information may correspond to NZP-CSI-RS-Resource IE.

A base station transmits control information for power adjustment (i.e., update) of downlink transmission to a UE (S1502).

Here, control information may be transmitted through lower layer signaling (e.g., MAC CE, DCI, etc.). For example, it may be DL transmission (Tx) power adjustment MAC CE.

The control information may include resource information (e.g., SSB, index of CSI-RS resource, etc.) related to power adjustment of downlink transmission. Additionally, the control information may include information on a power offset (hereinafter referred to as a second power offset) of power of downlink transmission (e.g., EPRE) compared to a resource (e.g. SSB, index of CSI-RS resources, etc.) related to power adjustment of downlink transmission. In this case, based on a second power offset, power (e.g., EPRE) of downlink transmission may be derived from power (e.g. EPRE) of a resource (e.g. SSB, index of CSI-RS resources, etc.) related to power adjustment of downlink transmission.

Additionally, control information for power adjustment of downlink transmission may include a time resource (e.g. slot index, subframe index, etc.), a frequency resource (e.g. RB index, etc.), and/or a spatial resource (e.g., layer index, etc.) on which power adjustment is to be performed. In this case, power adjustment of downlink transmission indicated by control information can be applied only to the corresponding time/frequency/spatial resource.

Alternatively, control information for power adjustment of downlink transmission may include information on a channel/signal (e.g., PDSCH, PDCCH, CSI-RS, etc.) on which power adjustment is to be performed. In this case, power adjustment of downlink transmission indicated by control information can be applied only to the corresponding channel/signal.

As described above, a base station that has transmitted control information for power adjustment (i.e., update) of downlink transmission can subsequently perform downlink transmission based on the adjusted power during downlink transmission (e.g. on a specific time/frequency/space resource or for a specific channel/signal).

Meanwhile, although not shown, a base station may receive a request for power adjustment of downlink transmission from a UE, and in response to this, may transmit control information for power adjustment of downlink transmission. Here, a request for power adjustment of downlink transmission may include information on a resource (e.g. a time/frequency/space resource, or a resource of a specific channel/signal) or multiplexing mode (i.e. DU-Tx/MT-Tx, DU-Rx/MT-Rx, DU-Tx/MT-Rx, DU-Rx/MT-Tx) for which power adjustment is requested. In addition, only when a UE determines that it is possible to transmit a request for power adjustment of downlink transmission based on a power level of downlink transmission of a base station, the UE may transmit a request for power adjustment of the downlink transmission to the base station.

In addition, although not shown, a base station may receive a request for power adjustment of downlink transmission from a UE, and in response to this, may transmit information indicating that a request for power adjustment of downlink transmission has been received to the UE. Additionally, a base station can transmit control information for adjusting power of downlink transmission to a UE.

In addition, although not shown, when performing CSI reporting on a CSI-RS resource indicated by control information for power adjustment of downlink transmission, a UE may perform CSI-RS reporting based on the control information. For example, when transmission power of a PDSCH is adjusted (updated) compared to a specific CSI-RS resource by control information for adjusting power of downlink transmission, when reporting CSI based on the specific CSI-RS, a UE can calculate a CQI based on the adjusted (updated) PDSCH transmission power and report it by including it in the CSI. That is, when receiving a CSI report for a specific CSI-RS based on control information for power adjustment of downlink transmission from a UE, a base station can confirm/recognize that a CQI in the corresponding CSI is calculated as adjusted power for a PDSCH.

General Device to which the Present Disclosure may be applied

FIG. 16 is a diagram which illustrates a block diagram of a wireless communication device according to an embodiment of the present disclosure.

In reference to FIG. 16, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of receiving control information in a wireless communication system, the method performed by a user equipment (UE) comprising:

   receiving, from a base station, first configuration information related to a serving cell and second configuration information related to a CSI-RS resource, wherein the first configuration information includes information on energy per resource element (EPRE) of a secondary synchronization signal (SSS) and the second configuration information includes information on a first power offset of EPRE of the CSI-RS resource relative to the EPRE for the SSS; and
   receiving, from the base station, control information for power adjustment of downlink transmission,
   wherein the control information includes an index of a CSI-RS resource related to power adjustment of the downlink transmission.

2. The method of claim 1, wherein the control information includes information on a second power offset of EPRE of the downlink transmission relative to the CSI-RS resource related to power adjustment of the downlink transmission, and
   wherein based on the second power offset, the EPRE of the downlink transmission is derived from the EPRE of the CSI-RS resource related to power adjustment of the downlink transmission.

3. The method of claim 2, wherein based on the control information, CSI reporting related to the CSI-RS resource related to power adjustment of the downlink transmission is performed.

4. The method of claim 1, wherein the control information includes information on a slot index to be applied to power adjustment of the downlink transmission, and
   wherein power adjustment of the downlink transmission is applied to the downlink transmission in a slot indicated by the slot index based on the control information.

5. The method of claim 1, further comprising:

   transmitting, to the base station, a request for power adjustment of the downlink transmission,
   wherein the control information is transmitted in response to the request for power adjustment of the downlink transmission.

6. The method of claim 5, wherein the request for power adjustment of the downlink transmission includes information on a resource or a multiplexing mode for which power adjustment is requested.

7. The method of claim 5, wherein only when the UE determines that transmission of the request for power adjustment of the downlink transmission is possible based on a power level of the downlink transmission, the request for power adjustment of the downlink transmission is transmitted to the base station.

8. The method of claim 5, further comprising:
   receiving, from the base station, information for notifying that the request for power adjustment of the downlink transmission has been received.

9. A user equipment (UE) of receiving control information in a wireless communication system, the UE comprising:

   at least one transceiver for transmitting and receiving a wireless signal; and
   at least one processor for controlling the at least one transceiver,
   wherein the at least one processor configured to:

   receive, from a base station, first configuration information related to a serving cell and second configuration information related to a CSI-RS resource, wherein the first configuration information includes information on energy per resource element (EPRE) of a secondary synchronization signal (SSS) and the second configuration information includes information on a first power offset of EPRE of the CSI-RS resource relative to the EPRE for the SSS; and
   receive, from the base station, control information for power adjustment of downlink transmission,
   wherein the control information includes an index of a CSI-RS resource related to power adjustment of the downlink transmission.

10. At least one non-transitory computer-readable medium storing at least one instruction, wherein the at least one instruction executable by at least one processor controls a device of receiving control information to:

receive, from a base station, first configuration information related to a serving cell and second configuration information related to a CSI-RS resource, wherein the first configuration information includes information on energy per resource element (EPRE) of a secondary synchronization signal (SSS) and the second configuration information includes information on a first power offset of EPRE of the CSI-RS resource relative to the EPRE for the SSS; and
receive, from the base station, control information for power adjustment of downlink transmission, wherein the control information includes an index of a CSI-RS resource related to power adjustment of the downlink transmission.

11. A processing apparatus configured to control a user equipment (UE) of receiving control information in a wireless communication system, the processing apparatus comprising:

at least one processor; and
at least one computer memory operably connected to the at least one processor and storing instructions that, based on being executed by the at least one processor, perform operations comprising:

receiving, from a base station, first configuration information related to a serving cell and second configuration information related to a CSI-RS resource, wherein the first configuration information includes information on energy per resource element (EPRE) of a secondary synchronization signal (SSS) and the second configuration information includes information on a first power offset of EPRE of the CSI-RS resource relative to the EPRE for the SSS; and
receiving, from the base station, control information for power adjustment of downlink transmission, wherein the control information includes an index of a CSI-RS resource related to power adjustment of the downlink transmission.

12. A method of transmitting control information in a wireless communication system, the method performed by a base station comprising:

transmitting, to a user equipment (UE), first configuration information related to a serving cell and second configuration information related to a CSI-RS resource, wherein the first configuration information includes information on energy per resource element (EPRE) of a secondary synchronization signal (SSS) and the second configuration information includes information on a first power offset of EPRE of the CSI-RS resource relative to the EPRE for the SSS; and
transmitting, to the UE, control information for power adjustment of downlink transmission, wherein the control information includes an index of a CSI-RS resource related to power adjustment of the downlink transmission.

13. A base station of receiving control information in a wireless communication system, the base station comprising:

at least one transceiver for transmitting and receiving a wireless signal; and
at least one processor for controlling the at least one transceiver,
wherein the at least one processor configured to:

transmit, to a user equipment (UE), first configuration information related to a serving cell and second configuration information related to a CSI-RS resource, wherein the first configuration information includes information on energy per resource element (EPRE) of a secondary synchronization signal (SSS) and the second configuration information includes information on a first power offset of EPRE of the CSI-RS resource relative to the EPRE for the SSS; and,
transmit, to the UE, control information for power adjustment of downlink transmission, wherein the control information includes an index of a CSI-RS resource related to power adjustment of the downlink transmission.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
 – In a resource grid, $(k, \bar{l})$
 – In a resource block, $(k, l)$

$k = 0$

$l = 0$

$l = 14 \cdot 2^{\mu} - 1$

FIG.4

# FIG.5

Resource grid

A carrier
(up to 3300 subcarriers, i.e., 275 RBs)

A BWP

1 RB=12 subcarrier

1 RE

1 subcarrier

1 Symbol

l=0 ·····

k=0

## FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601

S602

S603

S604

S605

S606

S607

S608

· DL/UL ACK/NACK
· UE CQI/PMI RI REPORT
  USING PUSCH AND PUCCH

## FIG.7

## FIG.8

FIG.9

(a) UE:SA with NGC / IAB-node:SA with NGC

(b) UE:NSA with EPC / IAB-node:SA with NGC

(c) UE:NSA with EPC / IAB-node:NSA with EPC

FIG.10

(a)

(b)

FIG.11

FIG.12

EP 4 383 841 A1

Child IAB
node

MT

Child link

IAB node

DU MT

Parent link 1

Parent link 2

Parent
node 1

DU

Parent
node 2

DU

FIG.13

Base station                                                                    UE

Configuration information related
to power of downlink transmission                                    S1301

Request for power adjustment of downlink transmission              S1302

Information for notifying that request for power
adjustment of downlink transmission has been received            S1303

Control information for power adjustment
of downlink transmission                                              S1304

FIG.14

Receive first configuration information related to a serving cell and second configuration information related to CSI-RS resource ～ S1401

Receive control information for power adjustment of downlink transmission ～ S1402

FIG.15

Transmit first configuration information related to a serving cell and second configuration information related to CSI-RS resource ～ S1501

Transmit control information for power adjustment of downlink transmission ～ S1502

EP 4 383 841 A1

FIG.16

## INTERNATIONAL SEARCH REPORT

| | International application No. |
|---|---|
| | **PCT/KR2022/011582** |

| A. | CLASSIFICATION OF SUBJECT MATTER |
|---|---|

**H04W 52/14**(2009.01)i; **H04W 52/38**(2009.01)i; **H04W 84/04**(2009.01)i; **H04W 92/20**(2009.01)i

According to International Patent Classification (IPC) or to both national classification and IPC

| B. | FIELDS SEARCHED |
|---|---|

Minimum documentation searched (classification system followed by classification symbols)

H04W 52/14(2009.01); H04J 11/00(2006.01); H04L 27/28(2006.01); H04L 5/00(2006.01); H04W 24/08(2009.01); H04W 52/18(2009.01); H04W 52/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 세컨더리 동기 신호(SSS: secondary synchronization signal), 자원 요소 별 에너지 (EPRE: energy per resource element), CSI-RS 자원(channel state information-reference signal resource), 파워 오프셋(power offset), 파워 조정(power adjustment)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2014-0060486 A (LG ELECTRONICS INC.) 20 May 2014 (2014-05-20)<br>See claims 2 and 7. | 1-13 |
| DY | 3GPP; TSG RAN; NR; Physical layer procedures for data (Release 16). 3GPP TS 38.214 V16.6.0. 30 June 2021.<br>See sections 4.1, 5.1.4, 5.2.1.4.1, 5.2.1.6 and 5.2.2.5. | 1-13 |
| Y | KR 10-2017-0038849 A (INTEL CORPORATION) 07 April 2017 (2017-04-07)<br>See paragraphs [0045]-[0047]; claims 14 and 18; and figure 6. | 5-8 |
| A | US 2010-0254471 A1 (KO, Hyunsoo et al.) 07 October 2010 (2010-10-07)<br>See paragraphs [0110]-[0112]; and figure 16. | 1-13 |
| A | WO 2016-032305 A1 (LG ELECTRONICS INC.) 03 March 2016 (2016-03-03)<br>See paragraphs [0128]-[0129]; and figure 8. | 1-13 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2022** | **18 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="6"><strong>INTERNATIONAL SEARCH REPORT</strong><br>Information on patent family members</td><td>International application No.<br><strong>PCT/KR2022/011582</strong></td></tr>
</table>

| Patent document cited in search report | | | Publication date (day/month/year) | Patent family member(s) | | | Publication date (day/month/year) |
|---|---|---|---|---|---|---|---|
| KR | 10-2014-0060486 | A | 20 May 2014 | US | 2014-0177532 | A1 | 26 June 2014 |
| | | | | US | 9277513 | B2 | 01 March 2016 |
| | | | | WO | 2013-036028 | A1 | 14 March 2013 |
| KR | 10-2017-0038849 | A | 07 April 2017 | CN | 106664662 | A | 10 May 2017 |
| | | | | CN | 106664662 | B | 25 December 2020 |
| | | | | EP | 3198952 | A1 | 02 August 2017 |
| | | | | EP | 3198952 | B1 | 13 November 2019 |
| | | | | US | 2016-0088573 | A1 | 24 March 2016 |
| | | | | WO | 2016-048443 | A1 | 31 March 2016 |
| US | 2010-0254471 | A1 | 07 October 2010 | KR | 10-1546100 | B1 | 24 August 2015 |
| | | | | KR | 10-2010-0111608 | A | 15 October 2010 |
| | | | | US | 8472539 | B2 | 25 June 2013 |
| WO | 2016-032305 | A1 | 03 March 2016 | CN | 106576009 | A | 19 April 2017 |
| | | | | CN | 106576009 | B | 08 March 2019 |
| | | | | EP | 3186905 | A1 | 05 July 2017 |
| | | | | EP | 3186905 | A4 | 15 August 2018 |
| | | | | EP | 3186905 | B1 | 18 August 2021 |
| | | | | US | 10153878 | B2 | 11 December 2018 |
| | | | | US | 2017-0207891 | A1 | 20 July 2017 |

Form PCT/ISA/210 (patent family annex) (July 2022)